# EUROPEAN PATENT APPLICATION

(11) **EP 2 375 731 A1**
(43) Date of publication of application: **12.10.2011**
(21) Application number: 10186760.4
(22) Date of filing: 06.10.2010
(51) Int. Cl.: H04N 5/445, H04N 7/16, H04N 7/24

(54) **Mobile terminal and related contents providing method using broadcast service guide information thereof**

(30) Priority: 12.04.2010 KR 20100033505
(71) Applicant: LG Electronics Inc., Seoul 150-721 (KR)
(72) Inventor: Ko, Youngseok, Seoul (KR); You, Soolim, Gyeonggi-Do (KR); Hong, Seokmin, Seoul (KR)
(74) Representative: TER MEER - STEINMEISTER & PARTNER GbR

(57) **Abstract**

Disclosed are a mobile terminal and a related contents providing method using broadcast service guide information thereof. The mobile terminal video-records or captures broadcast data being currently provided when receiving a capture or video-recording command while the broadcast data is being provided. And, the mobile terminal stores the captured or video-recorded broadcast data in a memory, as one content, by including broadcast service guide information therein. Then, if related search is requested while viewing the broadcast data, contents relating to the broadcast data being currently provided are searched from the memory to be displayed.

## Description

### FIELD OF THE INVENTION

The present invention relates to a mobile terminal and a related contents providing method using broadcast service guide information thereof, and particularly, to a mobile terminal capable of storing broadcast data and corresponding broadcast service guide information when capturing or video-recording broadcast data, and capable of searching and providing broadcast data relating to the stored broadcast data when playing the stored broadcast data, and a related contents providing method using broadcast service guide information thereof.

### DESCRIPTION OF THE RELATED ART

As terminals, such as personal computers, notebooks, mobile phones and the like, become multifunctional, the terminals can be allowed to capture still images or moving images, play music or video files, play games, receive broadcast and the like, so as to be implemented as an integrated multimedia player.

In general, terminals may be divided into a mobile terminal and a stationary terminal according to each mobility. The mobile terminal may then be categorized into a handheld terminal and a vehicle mounted terminal according to whether a user can carry it around.

As wireless communications and broadcast techniques are combined to each other, a service which allows a user to conveniently view digital broadcast while moving is being provided. This digital broadcast service may be categorized into a terrestrial broadcast service and a satellite broadcast service according to a transmission method and a network configuration.

A terminal which supports this digital broadcast service receives a service guide such as an electronic service guide (ESG) provided from a broadcast center, stores the received service guide in a memory, and then provides the service guide to a user when requested by the user. That is, the user may select a desired item or service through information included in the service guide stored in the terminal.

### SUMMARY OF THE INVENTION

Therefore, an object of the present invention is to provide a mobile terminal capable of storing digital broadcast data captured or video-recorded while being viewed, together with broadcast service guide information of the digital broadcast data, and a related contents providing method using broadcast service guide information thereof.

Another object of the present invention is to provide a mobile terminal capable of searching for broadcast contents mapped with broadcast service guide information of broadcast data being currently played (reproduced) when playing the broadcast data pre-stored in the mobile terminal, and capable of providing the searched broadcast contents as related contents, and a related contents providing method using broadcast service guide information thereof.

Still another object of the present invention is to provide a mobile terminal capable of providing broadcast data relating to digital broadcast being currently provided while viewing the digital broadcast, among broadcast data stored in the mobile terminal, based on broadcast service guide information, and a related contents providing method using broadcast service guide information thereof.

To achieve these and other advantages and in accordance with the purpose of the present invention, as embodied and broadly described herein, there is provided a related contents providing method using broadcast service guide information of a mobile terminal, the method comprising: playing one of broadcast contents pre-stored in the mobile terminal; searching for broadcast contents relating to the broadcast content being currently played at a particulartime when the broadcast content is played; and displaying information about the searched broadcast contents.

To achieve these and other advantages and in accordance with the purpose of the present invention, as embodied and broadly described herein, there is also provided a mobile terminal, comprising: a broadcast receiving module configured to receive broadcast data and broadcast service guide information; a memory configured to store therein broadcast contents including one or more parts of the received broadcast data, together with broadcast service guide information of the broadcast contents; a controller configured to search broadcast contents relating to a broadcast content being currently played, based on broadcast service guide information included in the broadcast content being currently played, while playing the broadcast content selected from the broadcast contents pre-stored in the memory, and configured to process the searched broadcast contents; and a display unit configured to display the broadcast content being currently played under control of the controller.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram of a mobile terminal in accordance with one embodiment of the present invention;
FIG. 2A is a front perspective view of the mobile terminal in accordance with the one embodiment of the present invention;
FIG. 2B is a rear perspective view of the mobile terminal in accordance with the one embodiment of the present invention;
FIG. 3 is a block diagram of a broadcast receiving module of the mobile terminal of FIG. 1;
FIG. 4 is a flowchart showing a broadcast data playing method of a mobile terminal according to the present invention;
FIG. 5 is a view showing broadcast service guide information according to the present invention;
FIG. 6 is a view of a broadcast program guide screen of a mobile terminal according to the present invention, based on broadcast service guide information;
FIG. 7 is a flowchart showing a broadcast data storing method by a mobile terminal according to a first embodiment of the present invention;
FIG. 8 is a flowchart showing a broadcast data storing process by a mobile terminal according to a first embodiment of the present invention;
FIG. 9 is a flowchart showing a related contents providing method by a mobile terminal according to a first embodiment of the present invention;
FIG. 10 is a flowchart showing a method for processing searched pre-stored contents by a mobile terminal according to the present invention;
FIG. 11 is a flowchart showing a method for processing searched real-time broadcast contents by a mobile terminal according to the present invention;
FIG. 12 is a flowchart showing a related contents providing method by a mobile terminal according to a second embodiment of the present invention;
FIGS. 13A to 13D are views showing one example of providing related contents when a mobile terminal according to a second embodiment of the present invention enters a broadcast mode;
FIG. 14 is a flowchart showing a related contents providing method by a mobile terminal according to a third embodiment of the present invention;
FIGS. 15A to 15F are views showing one example of providing pre-stored contents relating to a broadcast being currently provided by a mobile terminal according to a third embodiment of the present invention;
FIG. 16 is a flowchart showing a related contents providing method by a mobile terminal according to a fourth embodiment of the present invention;
FIGS. 17A to 17F are views showing one example of providing pre-stored contents relating to broadcast data disrupted when a mobile terminal according to a fourth embodiment of the present invention enters a region where broadcast reception is not allowed;
FIGS. 18A and 18B are flowcharts showing a related contents providing method by a mobile terminal according to a fifth embodiment of the present invention;
FIGS. 19A to 19E are views showing one example of a viewing reservation process by a mobile terminal according to a fifth embodiment of the present invention;
FIG. 20 is a view showing another example of the viewing reservation process by a mobile terminal according to a fifth embodiment of the present invention;
FIG. 21 is a flowchart showing a related contents providing method by a mobile terminal according to a sixth embodiment of the present invention;
FIG. 22 is a flowchart showing a related contents providing method by a mobile terminal according to a seventh embodiment of the present invention;
FIG. 23 is a view showing a related contents providing method by the mobile terminal of FIG. 22;
FIG. 24 is a flowchart showing a related contents providing method by a mobile terminal according to an eighth embodiment of the present invention; and
FIG. 25 is a view showing one example of providing related broadcast service by the mobile terminal of FIG. 24.

### DETAILED DESCRIPTION OF PREFERRED EMBODIMENTS

Description will now be given in detail of the present invention, with reference to the accompanying drawings.

For the sake of brief description with reference to the drawings, the same or equivalent components will be provided with the same reference numbers, and description thereof will not be repeated.

Hereinafter, a mobile terminal according to the present invention will be explained in more detail with reference to the attached drawings The suffixes attached to components of the mobile terminal, such as 'module' and 'unit or portion' were used for facilitation of the detailed description of the present invention. Therefore, the suffixes do not have different meanings from each other.

Mobile terminals described in the present invention may include mobile phones, smart phones, laptop computers, digital broadcasting terminals, personal digital assistants (PDAs), portable multimedia players (PMPs), navigators, and the like. However, it can be easily understood by those skilled in the art that the configuration in accordance with the preferred embodiment of the present invention may be applicable to stationary terminals, such as digital TVs, desktop computers and the like, excluding a case of being applicable only to the mobile terminals.

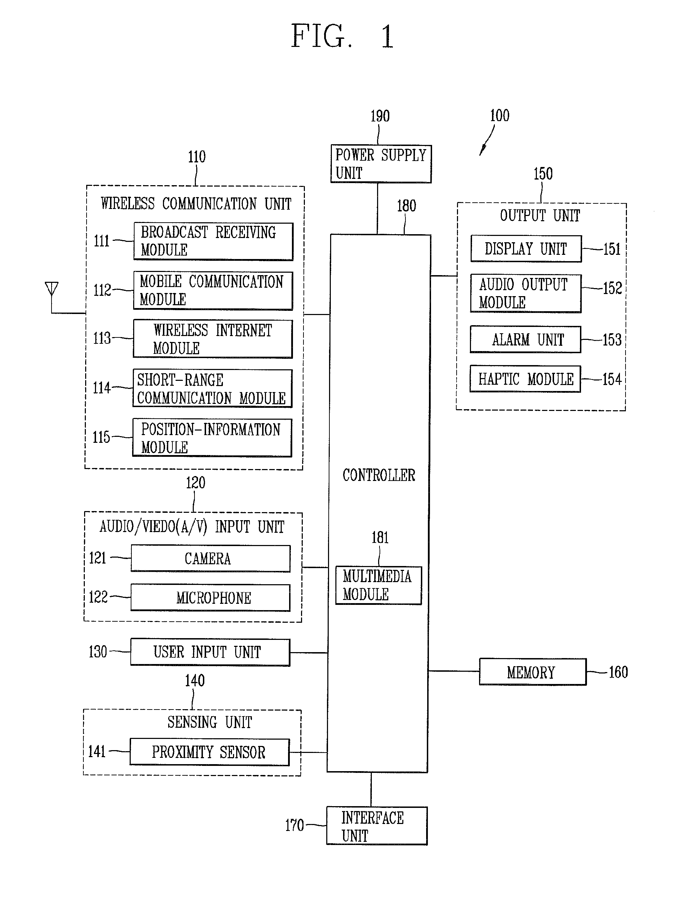

FIG. 1 is a block diagram of a mobile terminal in accordance with one embodiment of the present invention.

The mobile terminal 100 may comprise components, such as a wireless communication unit 110, an Audio/Video (A/V) input unit 120, a user input unit 130, a sensing unit 140, an output module 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more components which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position information module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

The broadcast associated information may indicate information relating to broadcast channels, broadcast programs or broadcast service providers. Further, the broadcast associated information may be provided via a mobile communication network and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T), and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external terminal, a server, etc.) on a mobile communication network. Here, the wireless signals may include audio call signal, video call signal, or various formats of data according to transmission/reception of text/multimedia messages.

The wireless internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), World Interoperability for Microwave Access (Wimax), High Speed Downlink Packet Access (HSDPA), and the like.

The short-range communication module 114 denotes a module for short-range communications. Suitable technologies for implementing this module may include BLUETOOTH, Radio Frequency IDentification (RFID), Infrared Data Association (IrDA), Ultra-WideBand (UWB), ZigBee, and the like.

The position information module 115 denotes a module for detecting or calculating a position of a mobile terminal. An example of the position information module 115 may include a Global Position System (GPS) module.

Referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video (telephony) call mode or a capturing mode. The processed image frames may be displayed on a display 151.

The image frames processed by the camera 121 may be stored in the memory 160 or transmitted to the exterior via the wireless communication unit 110. Two or more cameras 121 may be provided according to the use environment of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the orientation of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device and the like. Moreover, the sensing unit 140 may include a proximity sensor 141.

The output unit 150 is configured to output an audio signal, a video signal or an alarm signal. The output unit 150 may include a display 151, an audio output module 152, an alarm 153, a haptic module 154 and the like.

The display 151 may output information processed in the mobile terminal 100. For example, when the mobile terminal is operating in a phone call mode, the display 151 will provide a User Interface (UI) or a Graphic User Interface (GUI) which includes information associated with the call. As another example, if the mobile terminal is in a video call mode or a capturing mode, the display 151 may additionally or alternatively display images captured and/or received, UI, or GUI.

The display 151 may be implemented using, for example, a Liquid Crystal Display (LCD), a Thin Film Transistor-Liquid Crystal Display (TFT-LCD), an Organic Light-Emitting Diode (OLED), a flexible display, a three-dimensional (3D) display, or the like.

Some of the displays can be configured to be transparent such that it is possible to see the exterior therethrough. These displays may be called transparent displays. A representative example of the transparent display may include a Transparent Organic Light Emitting Diode (TOLED), and the like. The rear surface of the display 151 may also be implemented to be optically transparent. Under this configuration, a user can view an object positioned at a rear side of a terminal body through a region occupied by the display 151 of the terminal body.

The display 151 may be implemented in two or more in number according to a configured aspect of the mobile terminal 100. For instance, a plurality of the displays 151 may be arranged on one surface to be spaced apart from or integrated with each other, or may be arranged on different surfaces.

Here, if the display 151 and a touch sensitive sensor (referred to as a 'touch sensor') have a layered structure therebetween, the structure may be referred to as 'touch screen'. In this structure, the display 151 may be used as an input device rather than an output device. The touch sensor may be implemented as a touch film, a touch sheet, a touch pad, and the like.

The touch sensor may be configured to convert changes of a pressure applied to a specific part of the display 151, or a capacitance occurring from a specific part of the display 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display 151 has been touched.

As shown in FIG. 1, a proximity sensor 141 may be arranged at an inner region of the mobile terminal 100 covered by the touch screen, or near the touch screen. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display 151 or the audio output unit 152, the display 151 and the audio output module 152 may be categorized into a part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various haptic effects, including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects (signals) through a user's direct contact, or a user's muscular sense using a finger or a hand. The haptic module 154 may be implemented in two or more in number according to the configuration of the mobile terminal 100.

The memory 160 may store a program for the processing and control of the controller 180. Alternatively, the memory 160 may temporarily store input/output data (e.g., phonebook data, messages, still images, video and the like). Also, the memory 160 may store data relating to various patterns of vibrations and audio output upon the touch input on the touch screen.

The memory 160 stores a phone book (phone directory) including information about one or more call parties. The information about call parties may include names, phone numbers, homepage addresses, community site information, anniversaries, addresses, etc. The community site information may include addresses of community sites being currently used by the call parties, IDs, passwords, etc.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the mobile terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply unit 190 provides power required by various components under the control of the controller 180. The provided power may be internal power, external power, or combination thereof.

Various embodiments described herein may be implemented in a computer-readable medium using, for example, software, hardware, or some combination thereof.

For a hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

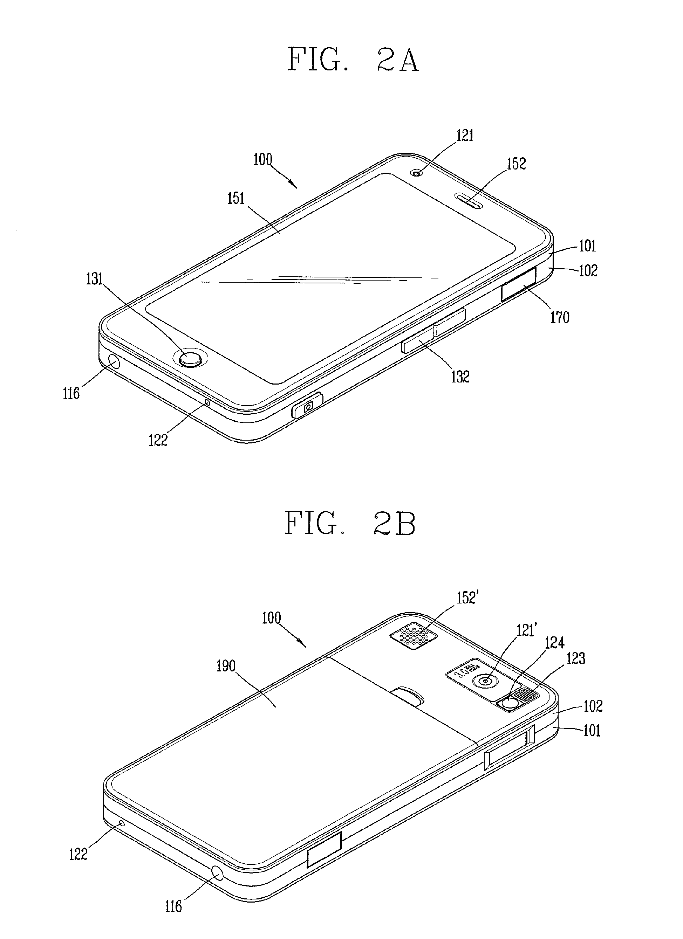

FIG. 2A is a front perspective views of the mobile terminal in accordance with the one embodiment of the present invention.

The mobile terminal 100 described is a bar type body. However, the present invention is not limited to the type, but applicable to various configurations having two or more bodies to each other to be relatively movable, such as a slide type, a folder type, a swing type, a swivel type and the like.

A case (casing, housing, cover, etc.) forming an outer appearance of a terminal body. In this embodiment, the case may include a front case 101 and a rear case 102. A space formed by the front case 101 and the rear case 102 may accommodate various components therein. At least one intermediate case may further be disposed between the front case 101 and the rear case 102.

Such cases may be formed of injection-molded synthetic resin, or may be formed using a metallic material such as stainless steel (STS) or titanium (Ti).

The terminal body, in detail, the front case 101 is shown having a display 151, an audio output module 152, a camera 121, a user input unit 130 (e.g., 131, 132), a microphone 122, an interface unit 170 and the like.

The display 151 may occupy most of a main surface of the front case 101. The audio output module 152 and the camera 121 are disposed at a region adjacent to one of both end portions of the display 151, and the user input unit 131 and the microphone 122 are disposed at a region adjacent to another end portion thereof. The user input unit 132, the interface unit 170 and the like may be disposed at side surfaces of the front case 101 and the rear case 102.

The user input unit 130 may be manipulated to receive a command input for controlling the operation of the mobile terminal 100, and include the first and second manipulation units 131 and 132. The first and second manipulation units 131 and 132 may be referred to as a manipulating portion. The manipulating portion may be operated by a user in any tactile manner.

Content input by the first and second manipulation units 131 and 132 may variously be set. For example, the first manipulation unit 131 may be configured to input commands such as START, END, SCROLL or the like, and the second manipulation unit 132 may be configured to input a command, such as adjusting an audio sound, a conversion of the display 151 into a touch-sensitive mode or the like.

FIG. 2B is a rear perspective view of the mobile terminal shown in FIG. 2A.

As shown in FIG. 2B, a rear surface of the terminal body, namely, the rear case 102 may further be provided with a camera 121'. The camera 121' faces a direction which is opposite to a direction faced by the camera 121, and may have different pixels from those of the camera 121.

For example, the camera 121 may operate with relatively lower pixels (lower resolution). Thus, the camera 121 may be useful when a user can capture his face and send it to another party during a video call or the like. On the other hand, the camera 121' may operate with a relatively higher pixels (higher resolution) such that it can be useful for a user to obtain higher quality pictures for later use. Such cameras 121 and 121' may be installed in the terminal body to be rotatable or popped up.

A flash 123 and a mirror 124 may additionally be disposed adjacent to the camera 121'. The flash 123 operates in conjunction with the camera 121' when taking a picture using the camera 121'. The mirror 124 can cooperate with the camera 121' to allow a user to photograph himself in a self-portrait mode.

An audio output module 152' may further be disposed at a rear surface of the terminal body. The audio output module 152' can cooperate with the audio output module 152 (see FIG. 2A) to provide stereo output. Also, the audio output module 152' may be configured to operate as a speakerphone.

A broadcast signal receiving antenna 116 may further be disposed at the side surface of the terminal body in addition to an antenna for communications. The antenna 116 configuring a part of the broadcast receiving module 111 (see FIG. 1) may be retractable into the terminal body.

A power supply unit 190 for supplying power to the mobile terminal 100 may be mounted to the terminal body. The power supply 190 may be internally disposed at the terminal body, or be detachably disposed outside the terminal body.

A touch pad 135 for detecting a touch input may further be disposed at the rear case 102. The touch pad 135 may also be configured to be transparent, as similar to the display 151. In this case, if the display 151 is configured to output visible information on its both surfaces, such visible information can be identified via the touch pad 135. Information output on the both surfaces may all be controlled by the touch pad 135. In a different manner from this, a display may further be mounted on the touch pad 135 so as to dispose a touch screen even at the rear case 102.

The touch pad 135 operates in cooperation with the display 151 of the front case 101. The touch pad 135 may be disposed at the rear side of the display 151 in parallel. Such touch pad 135 may be the same as or smaller than the display 151.

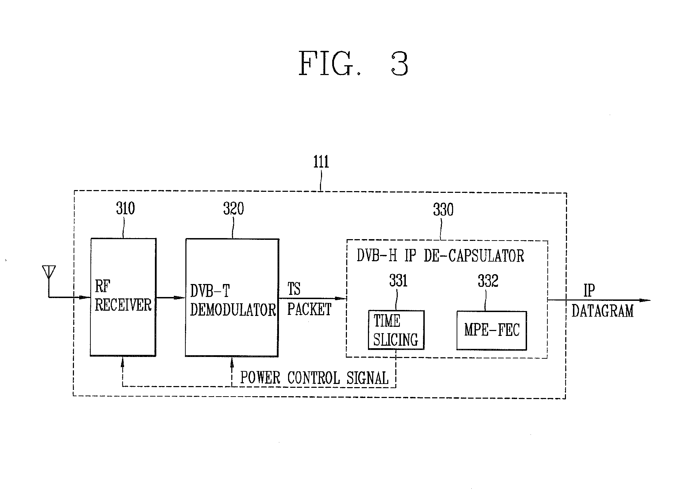

FIG. 3 is a block diagram of a broadcast receiving module of the mobile terminal of FIG. 1. As the broadcast receiving module, Digital Video Broadcast Handheld (DVB-H) system-based broadcast receiving module will be explained.

Referring to FIG. 3, the broadcast receiving module 111 includes an RF (radio frequency) receiver 310, a DVB-T(Terrestrial) demodulator (hereinafter, will be referred to as demodulator) 320, and an IP(Internet Protocol) decapsulator 330.

The RF receiver 310 sets a physical channel frequency to which a broadcast channel selected by a user is transmitted, and receives a broadcast signal of a broadcast channel which is broadcast through the set physical channel. That is, the RF receiver 310 receives broadcast data transmitted from a broadcast center through an antenna, and outputs the received broadcast data to the demodulator 320.

The demodulator 320 demodulates an MPEG-2 transport steam (TS) packet from a broadcast signal received through the RF receiver 310. The demodulator 320 demodulates broadcast data based on a Transmission Parameter Signal (TPS) according to transmission modes 8K, 4K and 2K provided from the broadcast center together with broadcast data. The TPS includes information about Time-Slicing, MPE-FEC(Multi-Protocol Encapsulated- Forward Error Correction), whether a 4K mode has been used, etc.

If the received broadcast data has undergone an MPE-FEC process, the demodulator 320 outputs the received broadcast data to an MPE-FEC module 332. On the other hand, if the received broadcast data has not undergone an MPE-FEC process, the demodulator 320 outputs the received broadcast data to the controller 180. And, the demodulator 320 provides the information about Time-Slicing included in the TPS, to a slicing module 331.

The IP decapsulator 330 includes a time slicing module 331 which performs time slicing according to the TPS, and an MPE-FEC module 332 which performs an MPE-FEC decoding when the received broadcast data has undergone an MPE-FEC coding.

In order to receive a TS packet through the RF receiver 310, the time slicing module 331 controls power of the RF receiver 310 and the demodulator 320, based on start time of a next burst duration included in a header of each MPE section and MPE-FEC section. More concretely, the time slicing module 331 operates the RF receiver 310 and the demodulator 320 only in a burst duration which activates time, thereby receiving broadcast data. On the other hand, the time slicing module 331 does not operate the RF receiver 310 and the demodulator 320 in an Off-Time duration. This time slicing technique may minimize battery consumption by reducing power consumption of the broadcast receiving module 111 by allowing broadcast data to be received only in a burst duration. That is, the broadcast receiving module 111 selects one of broadcast services time division-multiplexed in the order of time, and receives only bursts corresponding to the selected broadcast service, thereby having a reduced amount of power consumption.

If the received broadcast data has been MPE-FEC encoded, the MPE-FEC module 332 performs an MPE-FEC decoding. That is, the MPE-FEC module 332 performs a PID (Packet Identification) filtering process with respect to a TS packet, thereby identifying(checking) header information of the TS packet. If the packet ID indicates a packet which transmits an MPE section or an MPE-FEC section as a result of the identification, it is considered that an MPE section or an MPE-FEC section has been received. On the other hand, if the packet ID does not indicate a packet which transmits an MPE section or an MPE-FEC section as a result of the identification, specific program information and service information are received from the TS packet, thereby receiving broadcast reception-related service information such as time slicing and whether an MPE-FEC has been used or not. The MPE-FEC is a technique used to enhance a signal to noise (C/N), a Doppler frequency shift, and an endurance against impulse interference.

After the MPE-FEC decoding, the MPE-FEC module 332 outputs an IP datagram to the controller 180. The controller 180 transmits, to the multimedia module 181, the broadcast data decoded by the demodulator 320 and the DVB-H IP decapsulator 330. The multimedia module 181 performs an A/V (audio/video) decoding with respect to the decoded broadcast data, and outputs the broadcast data to the display 151. That is, the multimedia module 181 plays (reproduces) the broadcast data received through the broadcast receiving module 111, and displays it on the display 151.

In this preferred embodiment, the DVB-T demodulator 320 and the DVB-H IP decapsulator 330 are referred to as a DVB-H demodulator.

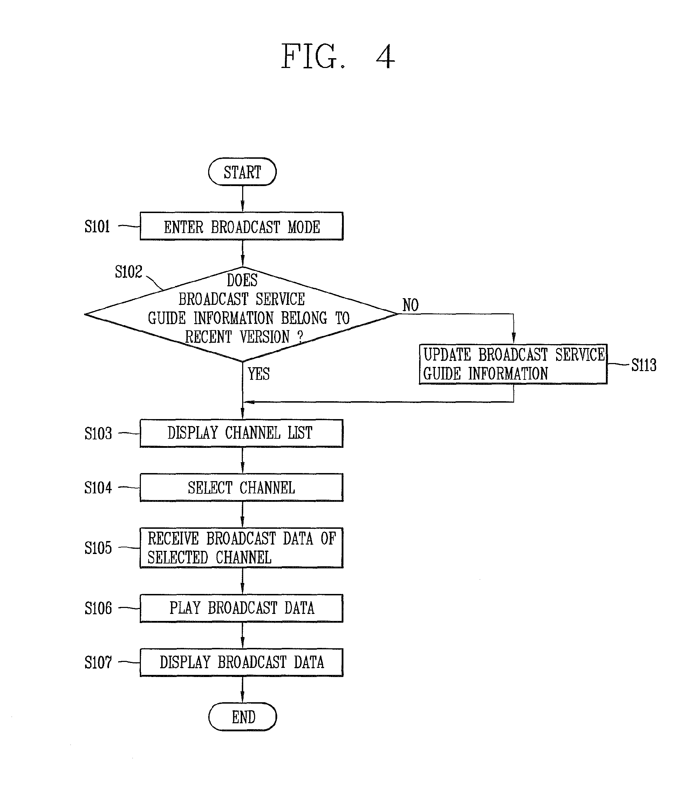

FIG. 4 is a flowchart showing a broadcast data playing method of a mobile terminal according to the present invention.

If a broadcast menu is selected by a user, the controller 180 of the mobile terminal 100 enters a broadcast mode (S101). When entering a broadcast mode, the controller 180 operates the broadcast receiving module 111. The controller 180 may immediately enter a broadcast mode when a shortcut key having a broadcast function allocated thereto is inputted.

The controller 180 checks whether broadcast service guide information (e.g., EPG) about the current real-time broadcast service inside the mobile terminal belongs to a recent version (S102). When entering a broadcast mode, the controller 180 checks whether the broadcast service guide information exists in the memory 160. If the broadcast service guide information exists in the memory 160, the controller 180 checks a version of the broadcast service guide information. For instance, the controller 180 checks whether the broadcast service guide information has expired. On the other hand, if the broadcast service guide information does not exist in the memory 160, the controller 180 receives broadcast service guide information provided from the broadcast center through the broadcast receiving module 111, and stores the received information in the memory 160. That is, when entering a broadcast mode, the controller 180 searches available channels.

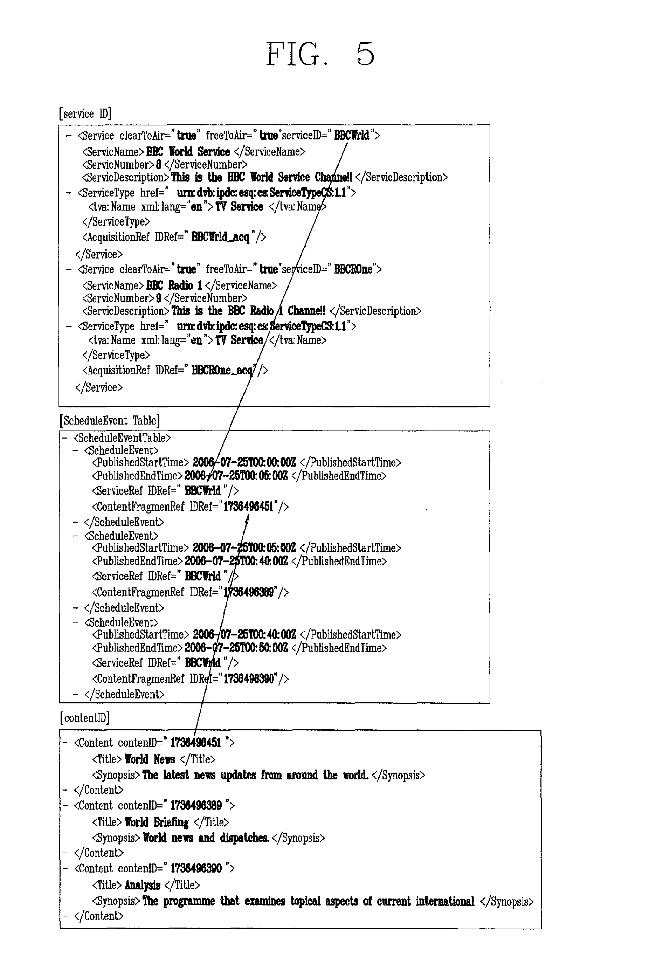

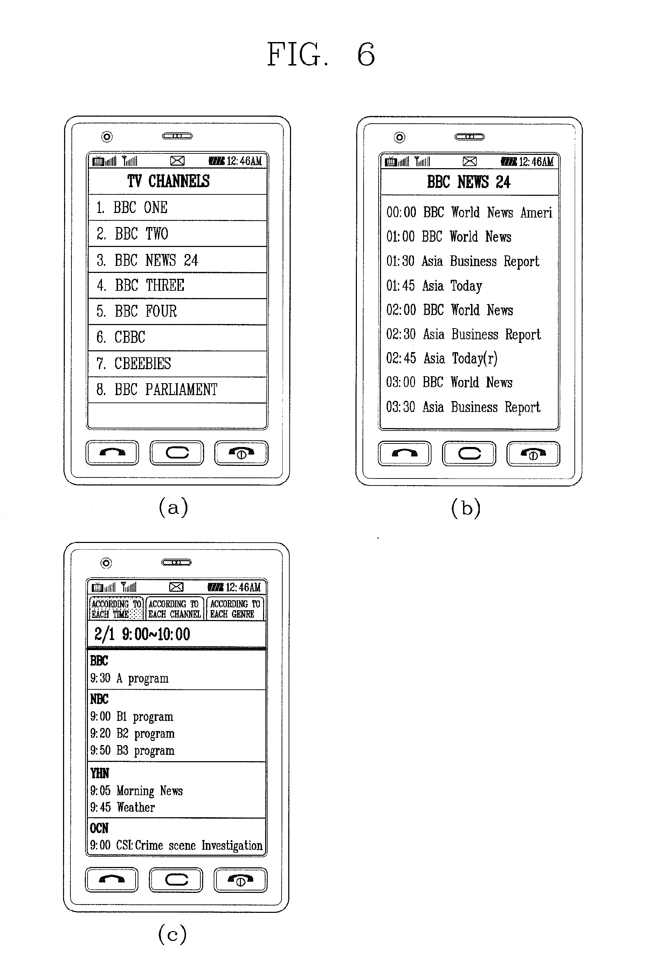

The broadcast service guide information is information relating to use of a broadcast service, and includes a schedule event fragment having a service identification (ID), a service name, a service number, a service description, a service type, channel information, a keyword, a theme, a genre, a main story, a contents (program) ID, a contents start time and a contents end time. Furthermore, the broadcast service guide information includes information for accessing a mobile terminal to an IP stream relating to a broadcast transmission stream. This broadcast service guide information is EPG data, and an XML(eXtensible Markup Language) file. FIG. 5 shows EPG data of a service ID, a schedule table, and a content ID as an XML code. The mobile terminal 100 makes a channel list of FIG. 6A by using a service ID, and creates a program list of FIG. 6B by using a content ID. Alternatively, the mobile terminal 100 may create a broadcast schedule of FIG. 6C by using a service ID, a content ID, and a schedule table.

If the broadcast service guide information belongs to a recent version as a result of the check, the controller 180 aligns to display the channel list based on the broadcast service guide information stored in the memory 160 (S103). The controller 180 makes the channel list by using service ID information included in the broadcast service guide information.

On the other hand, if the broadcast service guide information does not belong to a recent version, the controller 180 receives broadcast service guide information of a recent version from the broadcast center through the broadcast receiving module 111, thereby updating the broadcast service guide information of an old version (S113). If the broadcast service guide information has been completely updated, a service channel list is displayed based on the updated broadcast service guide information (S103). Here, the controller 180 aligns the service channel list by using service ID information included in the broadcast service guide information.

If one service channel is selected from the displayed channel list, the controller 180 receives broadcast data of the selected service channel through the broadcast receiving module 111 (S104, S105). And, the controller 180 plays the received broadcast data to display it on the display (S106, S107).

In the preferred embodiment, when the mobile terminal 100 enters a broadcast mode, a version of broadcast service guide information is checked to update the broadcast service guide information. However, the broadcast service guide information may be updated when requested by a user.

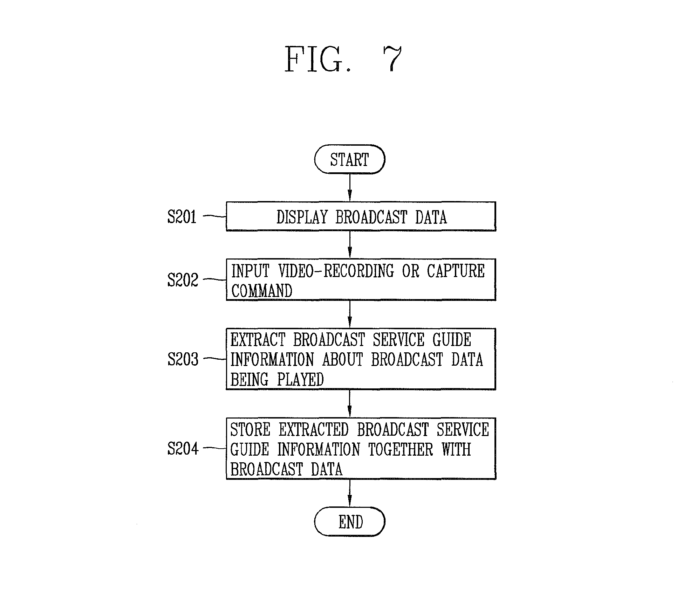

FIG. 7 is a flowchart showing a broadcast data storing method by a mobile terminal according to a first embodiment of the present invention.

Referring to FIG. 7, the controller 180 receives specific broadcast data through the broadcast receiving module 111 according to a user's input, and plays the received broadcast data to display it on the screen (S201).

If a video-recording command or a capture command is inputted through the user input unit 130 while displaying broadcast data on the screen, the controller 180 temporarily stores the broadcast data being currently displayed on the screen in a buffer (S202). More concretely, if a user inputs a video-recording command or a capture command while viewing digital broadcast, the controller 180 video-records or captures the digital broadcast being currently provided according to the command. For instance, if a video-recording command is inputted, the controller 180 starts to store, in the buffer, broadcast data received through the broadcast receiving module 111 from the time point when the video-recording command has been inputted. On the other hand, if a capture command is inputted, the controller 180 starts to store, in the buffer, broadcast data displayed on the screen at the time point when the capture command has been inputted.

The controller 180 extracts, from the pre-stored broadcast service guide information, broadcast service guide information about the broadcast data being displayed on the screen (S203). More concretely, if a video-recording command or a capture command is received from the user input unit 130, the controller 180 starts to store broadcast data, and extracts, from the pre-stored broadcast service guide information, broadcast service guide information such as a service identifier (ServiceID), a contents identifier (ContentID), schedule information (ScheduleEventTable) of a broadcast program being current provided. Here, the ServiceID indicates a service channel, the ContentID indicates a broadcast program, and the ScheduleEventTable indicates starting/end time of a broadcast program.

If the broadcast service guide information has been completely extracted, the controller 180 stores the extracted broadcast service guide information in the memory 160 together with the captured or video-recorded broadcast data (S204). Here, the controller 180 may create one content from the extracted broadcast service guide information and the captured or video-recorded broadcast data, thereby storing the created one content. Alternatively, the controller 180 may store the extracted broadcast service guide information and the captured or video-recorded broadcast data, respectively. For instance, if a video-recording command is inputted while a user is viewing a specific broadcast program, the controller 180 extracts, from the pre-stored broadcast service guide information, broadcast service guide information such as a ServiceID, a ScheduleEventTable and a ContentID, the broadcast service guide information relating to the specific broadcast program. Then, the controller 180 builds a database (DB) by including the extracted broadcast service guide information in the video-recorded broadcast program. The controller 180 builds a DB list about the captured or video-recorded broadcast data stored in the memory 160, and stores the DB list.

When building the DB List, the controller 180 may store flag information indicating whether broadcast content to be stored is a captured broadcast data or video-recorded broadcast data, together with the extracted broadcast service guide information. Alternatively, the controller 180 may store sequence information when storing each broadcast program per 20 minutes in case of video-recording a broadcast program having a running time of 1 hour, together with the extracted broadcast service guide information.

If search for contents relating to broadcast being video-recorded or captured is requested, the controller 180 searches one or more contents relating to the broadcast being video-recorded or captured, from the contents pre-stored in the mobile terminal. Then, the controller 180 may store the searched result by linking to the video-recorded or captured broadcast file. That is, the controller 180 stores the searched result together with memory address information where the searched broadcast file has been stored.

In the present invention, contents created by video-recording or capturing one or more parts of a broadcast being currently received are stored in the memory 160, and the contents stored in the memory 160 are referred to as pre-stored contents. The pre-stored contents may include broadcast service guide information about broadcast data having been video-recorded or captured.

A user may select a desired captured or video-recorded broadcast content, from the captured and video-recorded broadcast contents stored in the memory 160, and view the selected broadcast while viewing the current broadcast or after viewing the current broadcast.

For instance, the controller 180 executes a broadcast file box function according to a user's input while viewing the current broadcast or after viewing the current broadcast. And, the controller 180 displays a list of contents pre-stored in a broadcast file box. Here, the controller 180 displays the contents pre-stored in the broadcast file box by aligning according to a creation date, whether the pre-stored contents have been played or not, a play frequency, a play date, etc.

If one content is selected from the displayed list of the pre-stored contents, the controller 180 reads corresponding broadcast data from the memory 160 to play it. Then, the controller 180 displays the broadcast data being currently played on the screen.

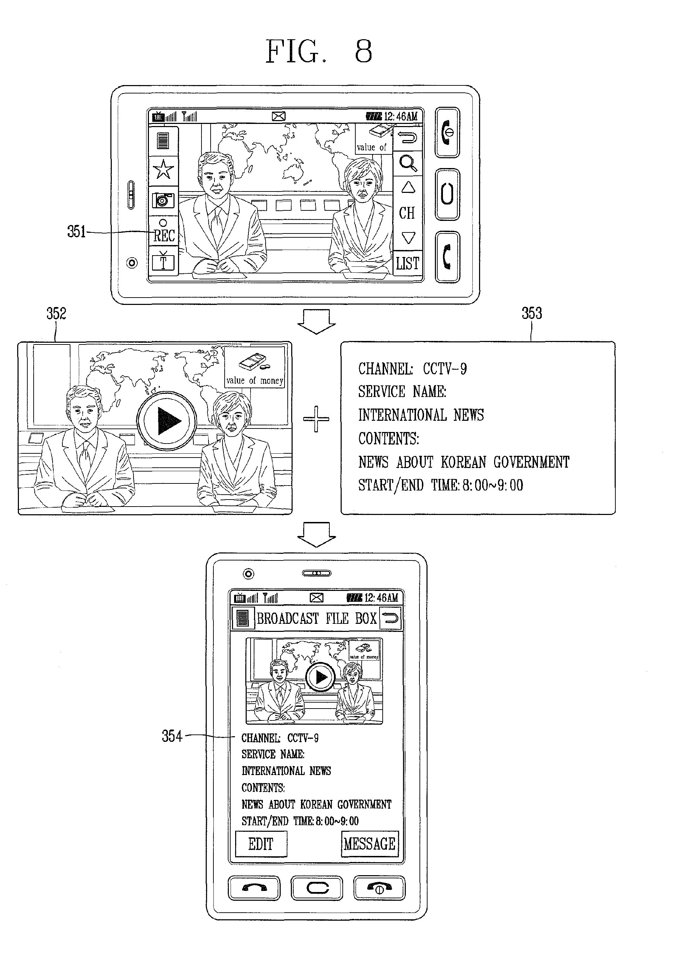

FIG. 8 is a flowchart showing a broadcast data storing process by the mobile terminal according to a first embodiment of the present invention.

First of all, the mobile terminal 100 receives broadcast data through the broadcast receiving module 111 according to a user's command, and plays the received broadcast data to display it on the screen.

If a video-recording icon 351 is inputted while viewing the broadcast displayed on the screen, the controller 180 of the mobile terminal starts to video-record the broadcast being currently provided. That is, the controller 180 stores the broadcast data received through the broadcast receiving module 111 in the memory 160 until a video-recording ending command is received.

And, the controller 180 extracts, from the pre-stored broadcast service guide information, broadcast service guide information of broadcast data being currently video-recorded.

If the video-recording has been completed, the controller 180 stores, in the broadcast content storage box, broadcast contents 352 created through the video-recording, together with the extracted broadcast service guide information 353. If a desired broadcast content is selected from the broadcast content storage box in order to check the stored broadcast contents, the controller 180 displays a detailed view 354 of the selected broadcast content. On the detailed view 354, broadcast service guide information about broadcast contents may be edited, or broadcast contents may be transmitted with being included in a message.

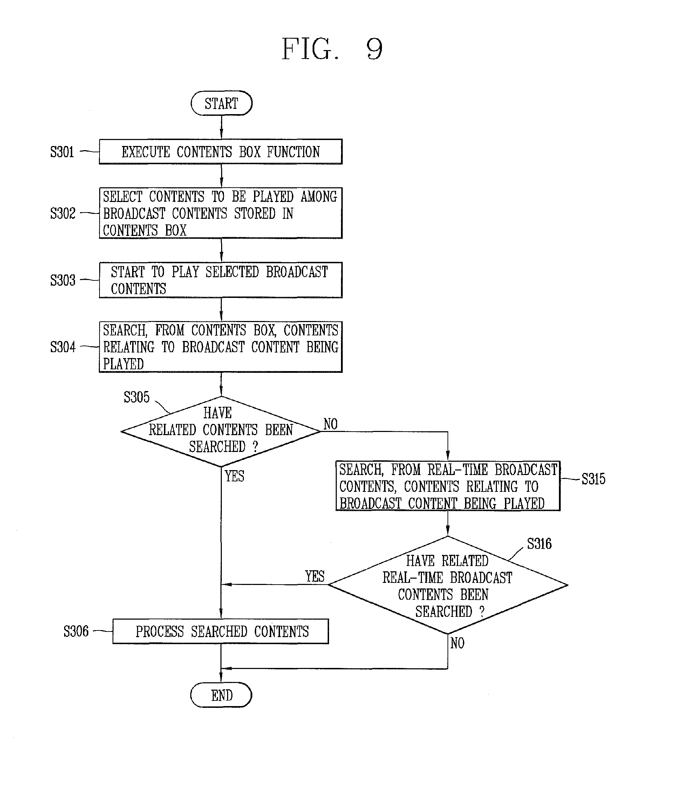

FIG. 9 is a flowchart showing a related contents providing method by the mobile terminal according to a first embodiment of the present invention.

Referring to FIG. 9, if a 'contents box' function is selected according to a user's manipulation, the controller 180 executes a contents box function (S301). The controller 180 displays, on the screen, a list of contents pre-stored in the memory 160. Here, the pre-stored contents may be broadcast data video-recorded or captured according to the aforementioned broadcast data storing method, or may be contents downloaded from a contents providing server through the wireless communication unit 110.

If one of the contents pre-stored in the contents box is selected and a play command is inputted, the controller 180 starts to play the selected pre-stored content according to the play command (S302, S303).

The controller 180 starts to play the selected pre-stored content, and searches, from the contents pre-stored in the memory 160, contents relating to the pre-stored content being currently played (S304). The controller 180 searches, from the contents pre-stored in the memory 160, a content including broadcast service guide information mapped with the broadcast service guide information of the pre-stored content being currently played. For instance, the controller 180 searches, from the broadcast contents stored in the mobile terminal, a content including content ID information mapped with a content ID, '1010001' of the pre-stored content being currently played.

If any pre-stored content relating to the content being currently played has been searched from the contents box, the controller 180 outputs an alarm signal to process the searched pre-stored content (S305, S306). The alarm signal includes a notification message, a voice message, an alarm sound, etc.

If any pre-stored content has not been searched in S305, the controller 180 searches, from broadcast service guide information about real-time broadcast contents, a real-time broadcast content mapped with the broadcast service guide information of the content being currently played (S315). If the real-time broadcast content is searched, the controller 180 processes the searched real-time broadcast content (S316, S306).

In the preferred embodiment, related contents are searched when playing a selected pre-stored content is started. However, the search for related contents may be executed after or before a selected pre-stored content has been completely played.

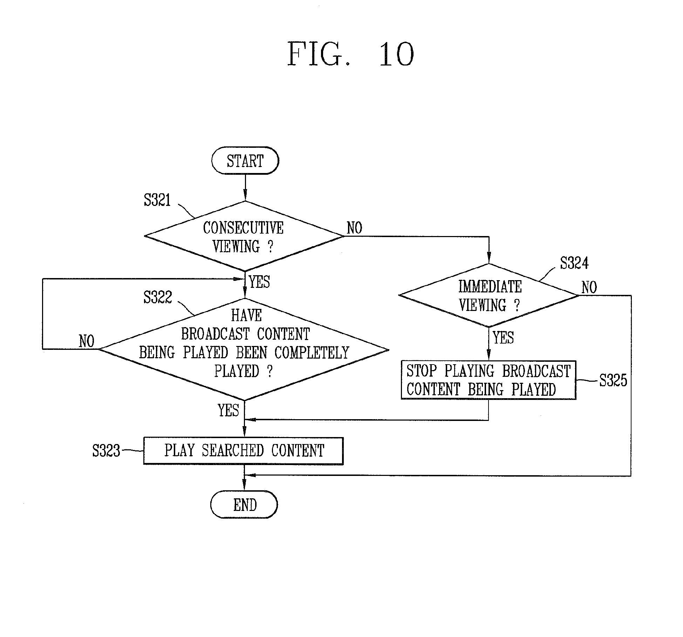

FIG. 10 is a flowchart showing a method for processing searched pre-stored contents by the mobile terminal according to the present invention.

Referring to FIG. 10, the controller 180 of the mobile terminal 100 displays a search result with respect to related contents, and determines whether to process the searched content according to a control signal inputted through the user input unit 130. Once a control signal inputted through the user input unit 130 is received, the controller 180 checks whether the control signal instructs a 'consecutive viewing' function (S321). That is, the controller 180 checks whether the control signal is a command instructing play of a content searched subsequently to the broadcast content being currently played.

If the control signal is a consecutive viewing command as a result of the check, the controller 180 checks whether the broadcast content being currently played has been completely played (S322).

If the broadcast content being currently played has been completely played, the controller 180 reads the searched content from the memory 160 to play it (S323).

If the control signal inputted through the user input unit 130 is a command of an 'immediate viewing' function in S321, the controller 180 stops playing the current broadcast content, and plays the searched content to display it (S324, S325). If the searched content has been completely played, the controller 180 re-starts to play the content of which play has been stopped.

On the other hand, if the control signal inputted through the user input unit 130 is a cancelling or ending command in S321, the controller 180 makes the screen displaying a searched result disappear, and continuously plays the broadcast content being currently played.

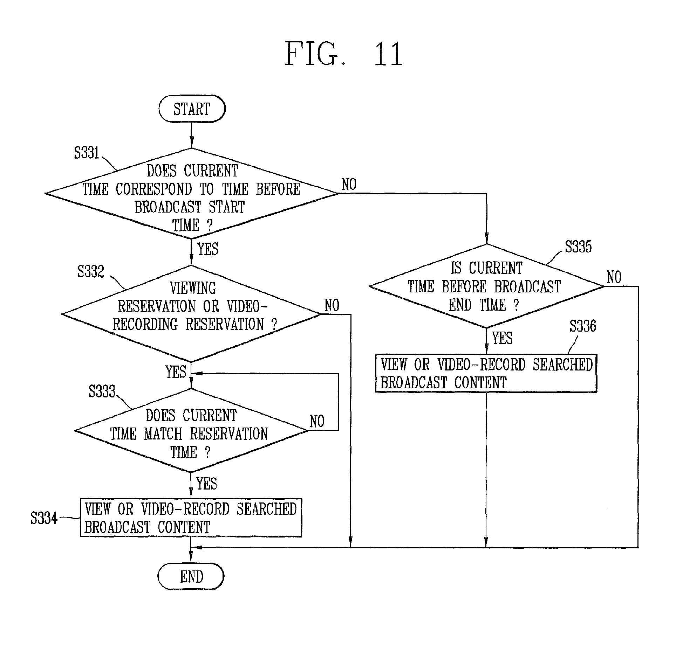

FIG. 11 is a flowchart showing a method for processing searched real-time broadcast contents by the mobile terminal according to the present invention.

If a real-time broadcast content relating to a broadcast content being currently played is searched, the controller 180 compares the current time with schedule information included in broadcast service guide information of the searched real-time broadcast content.

For instance, the controller 180 checks whether the current time is before a broadcast start time of the searched real-time broadcast content (S331).

If the current time is before the broadcast start time as a result of the check, the controller 180 checks whether a viewing reservation or a video-recording reservation has been set (S332). That is, the controller 180 checks whether a viewing or video-recording reservation has been set with respect to a searched real-time broadcast content. If a reservation setting is requested, the controller 180 sets the broadcast start time as a reservation time.

After executing the reservation setting, the controller 180 checks whether the current time is consistent with the reservation time (S333).

If the current time is consistent with the reservation time, the controller 180 receives the searched broadcast content through the broadcast receiving module 111. Then, the controller 180 plays the received broadcast content to display it, or video-records the received broadcast content (S334). The controller 180 may output an alarm signal when broadcast viewing or video-recording is started.

If the current time is not before the broadcast start time in S331, the controller 180 checks whether the current time is before a broadcast end time (S335). If the current time is before the broadcast end time, the controller 180 receives one or more searched real-time broadcast contents through the broadcast receiving module 111. And, the controller 180 plays to display the received broadcast content, or video-records the received broadcast content (S336).

If the current time is after the broadcast end time in S335, the controller 180 determines that search of related contents has failed. Then, the controller 180 informs a user that broadcasting of the searched real-time broadcast content has been ended, and displays broadcast schedule information of the corresponding broadcast content. The user may set a viewing reservation or a video-recording reservation based on the broadcast schedule information.

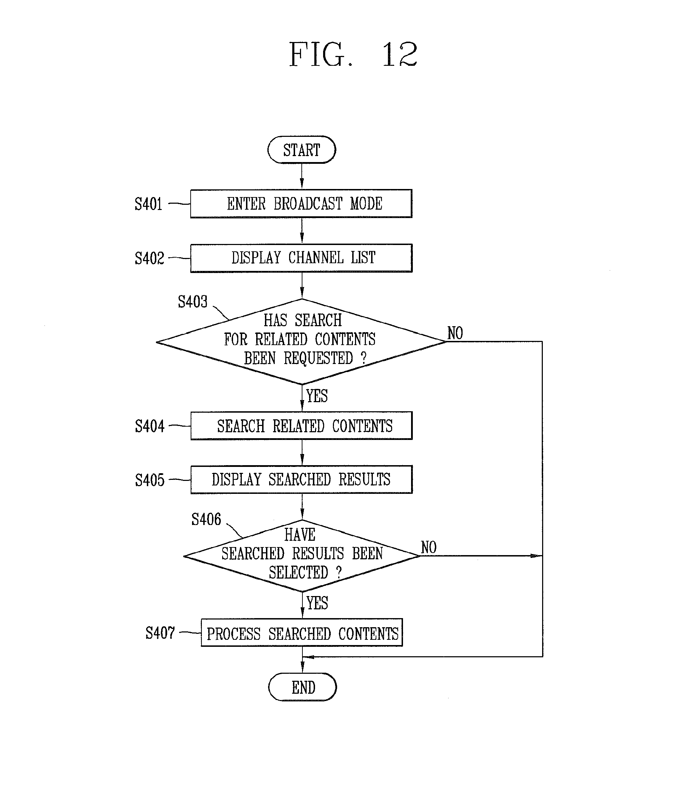

FIG. 12 is a flowchart showing a related contents providing method by a mobile terminal according to a second embodiment of the present invention.

Once a broadcast menu is selected by a user, the controller 180 enters a broadcast mode (S401).

Then, the controller 180 displays a channel list based on service ID information of broadcast service guide information (S402). Here, the controller 180 may read the broadcast service guide information from the memory 160, or through the broadcast receiving module 111.

If related contents are requested while displaying the channel list, the controller 180 searches related contents according to each channel displayed on the screen (S403, S404). More concretely, if related contents are requested by a user, the controller 180 searches for related contents, based on broadcast service guide information, from video-recorded and captured contents pre-stored in the broadcast file box. Here, the controller 180 checks a similarity between service ID information of each channel shown on the channel list, and service ID information of contents pre-stored in the broadcast file box. If the checked similarity is more than a threshold value, the controller 180 determines the corresponding pre-stored contents as related data.

If the search for related contents has been completed, the controller 180 displays results searched according to each item of the channel list (S405). The controller 180 may display the number of related-searched results or whether any related-searched result exists or not according to each channel.

If one of the displayed related-searched results is selected, the controller 180 displays a list of the related-searched results in a pop-up manner (S406, S407). For instance, if an icon indicating a related-searched result is selected by a user, the controller 180 displays the related-searched result corresponding to the selected icon on the screen. Here, the controller 180 allocates priorities to related-searched results based on a storage time, a similarity, etc., and displays the related-searched results by aligning according to the allocated priorities.

In the preferred embodiment, video-recorded or captured contents stored in the mobile terminal are searched. However, the present invention is not limited to this. Accordingly, video-recorded or captured contents stored in another mobile terminal may be searched through a short-range wireless communication or a wireless communication, etc.

If a content stored in another mobile terminal is selected, the mobile terminal requests the selected content from said another mobile terminal. Then, said another mobile terminal transmits the selected content to the mobile terminal through a wireless communication.

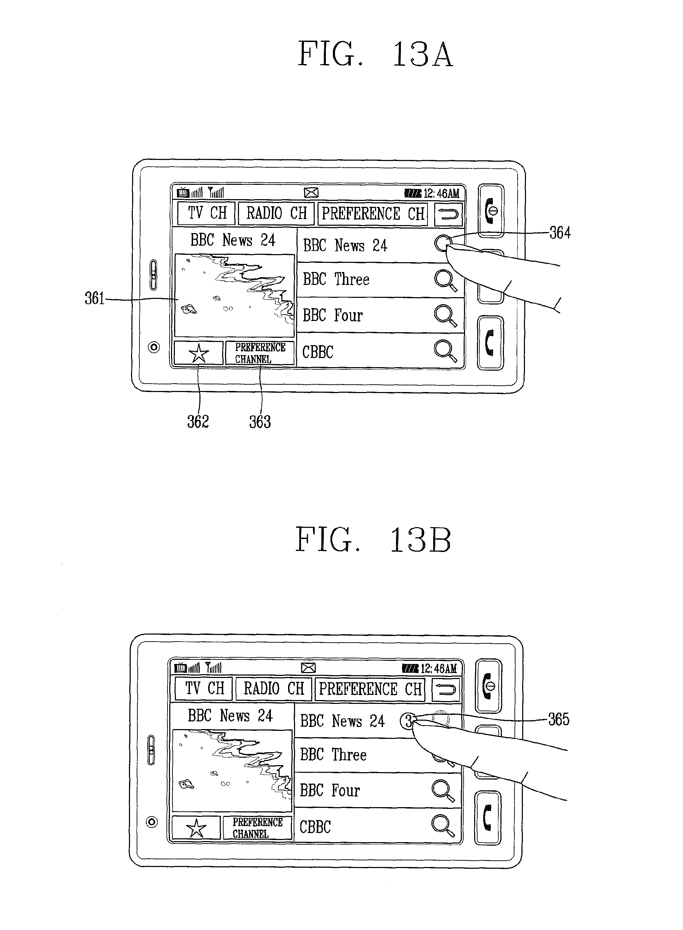

FIGS. 13A to 13D are views showing one example of providing related contents when a mobile terminal according to a second embodiment of the present invention enters a broadcast mode.

Referring to FIG. 13A, if a broadcast menu is selected by a user, the controller 180 enters a broadcast mode and operates the broadcast receiving module 111. And, the controller 180 displays a channel list based on broadcast service guide information. Here, the broadcast service guide information may be provided from the broadcast center through the broadcast receiving module 111, or may be read from the memory 160.

If one channel is selected from the channel list displayed on the screen, the controller 180 displays a preview screen 361 of the selected channel. The screen displaying the channel list includes a preference channel registration/release icon 362 for registering or releasing a preference channel of a channel being pre-viewed, and a channel search icon 363 for searching channels that are viewable on the current screen. In case of firstly executing a broadcast function, viewable channels have to be searched by using the channel search icon 363.

If a related search icon 364 on each channel item of the channel list is selected by a user, the controller 180 recognizes that pre-stored contents relating to the corresponding channel item are requested. The controller 180 searches, from the broadcast file box, pre-stored contents relating to the corresponding channel item. For instance, if touch of the related search icon 364 on a "BBC News 24" item of the channel list is sensed, the controller 180 searches, from the broadcast file box, pre-stored contents relating to broadcast service guide information about the BBC News 24.

If pre-stored contents relating to the selected channel item have been searched, the controller 180 displays, on the screen, an indicator 365 indicating that the pre-stored contents have been searched (FIG. 13B). For instance, if three pre-stored contents consistent with a service ID of the BBC News 24 have been searched, the controller 180 displays an icon indicating the number of the searched pre-stored contents.

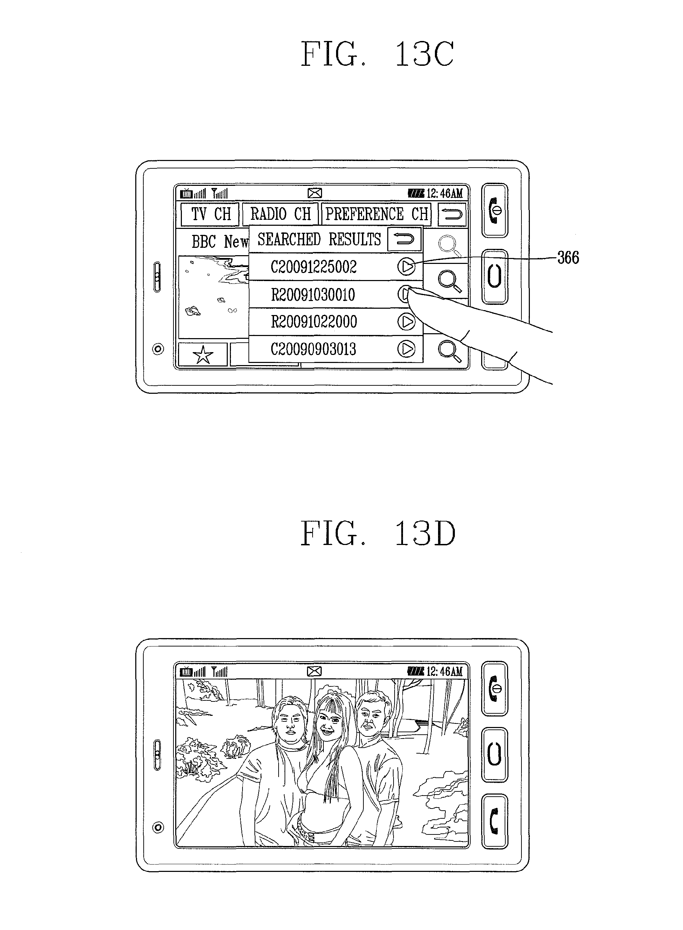

If the displayed indicator 365 is selected, the controller 180 displays a list of searched results on a popup window (FIG. 13C). A play icon 366 is provided at each searched result on the popup window. And, the controller 180 displays the searched pre-stored contents on the popup window by aligning them according to a creation date, a relativity therebetween, whether the searched pre-stored content has been played or not , a play frequency, etc.

If one item is selected from the list, the controller 180 reads pre-stored contents of the corresponding item from the broadcast file box to play them, and then displays the played pre-stored contents on the screen (FIG. 13D).

In the preferred embodiment, a user performs related search with respect to a selected specific channel. However, when the mobile terminal enters a broadcast mode, all contents relating to each channel on the channel list may be searched, and whether pre-stored contents searched according to each channel exist or not may be displayed.

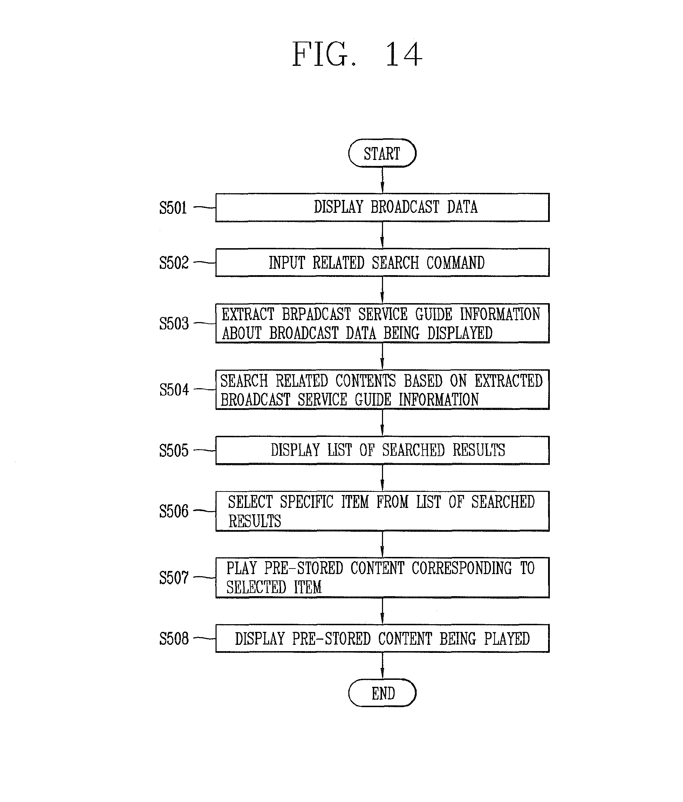

FIG. 14 is a flowchart showing a related contents providing method by a mobile terminal according to a third embodiment of the present invention.

If a user selects a specific broadcast channel, the controller 180 receives broadcast data provided from the broadcast channel through the broadcast receiving module 111. Then, the controller 180 plays the received broadcast data to output it to the display 150 (S501).

While playing and displaying the broadcast data received through the broadcast receiving module 111, the controller 180 receives a related search command from the user input unit 130 (S502).

After receiving the related search command, the controller 180 extracts, from the pre-stored broadcast service guide information, broadcast service guide information about broadcast data being currently displayed on the display (S503). That is, the controller 180 extracts, from the pre-stored broadcast service guide information, a ServiceID, a ContentID, a Schedule EventTable of a broadcast program being currently provided.

Once the broadcast service guide information has been extracted, the controller 180 searches for pre-stored contents relating to the displayed broadcast data, from the broadcast file box, based on the extracted broadcast service guide information (S504). More concretely, the controller 180 searches for related contents by mapping the extracted broadcast service guide information with broadcast service guide information of the contents pre-stored in the broadcast file box.

If the pre-stored contents have been completely searched, the controller 180 displays a list of the searched pre-stored contents on the screen (S505).

If one item is selected from the displayed list, the controller 180 reads, from the broadcast file box, pre-stored contents corresponding to the selected item, and transmits the read pre-stored contents to the multimedia module 181 (S506).

The multimedia module 181 plays the received pre-stored contents under control of the controller 180, and transmits the played pre-stored contents to the display 151 (S507). The display 151 displays the played pre-stored contents received from the multimedia module 181 on the screen (S508).

The controller 180 plays the broadcast data received through the broadcast receiving module 111 to display it on the screen, and displays played pre-stored contents on one region of the screen. For instance, based on a picture in picture (PIP) technique, the controller 180 may display broadcast data being currently broadcast on a main screen of the display 151, and may display played pre-stored contents on a sub screen of the display 151.

Alternatively, the controller 180 may display the played pre-stored contents on the screen with stopping receiving the broadcast data through the broadcast receiving module 111. Still alternatively, the controller 180 may store the broadcast data received through the broadcast receiving module 111 in the memory 160 while playing the pre-stored contents and displaying on the screen. Then, the controller 180 may play and display the broadcast data stored in the memory 160 when the pre-stored contents have been completely played.

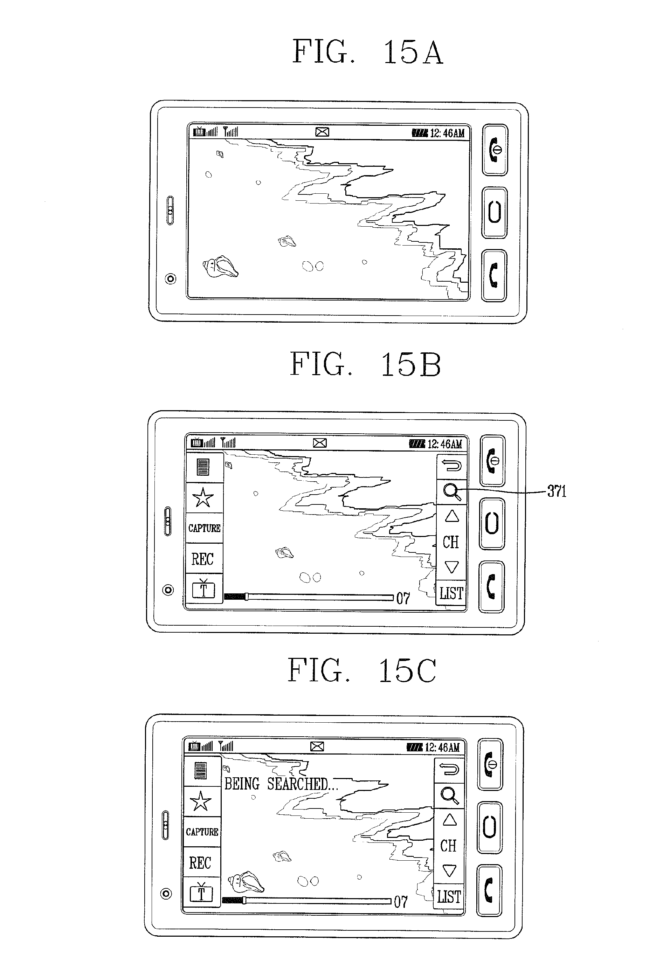

FIGS. 15A to 15F are views showing one example of providing pre-stored contents relating to a broadcast being currently provided by a mobile terminal according to a third embodiment of the present invention.

The controller 180 performs an A/V decoding with respect to broadcast data received through the broadcast receiving module 111, thereby displaying the broadcast data on the screen (FIG. 15A). If touch of the screen on which the broadcast data has been displayed is sensed, the controller 180 displays control icons (FIG. 15B).

If a related search icon 371 is selected from the control icons, the controller 180 extracts, from the pre-stored broadcast service guide information, broadcast service guide information of a broadcast program being currently provided. Then, the controller 180 searches for pre-stored contents relating to the broadcast program being viewed, based on the extracted broadcast service guide information. Here, the controller 180 may display, on the screen, an indicator or a message indicating that related search is being executed (FIG. 15C).

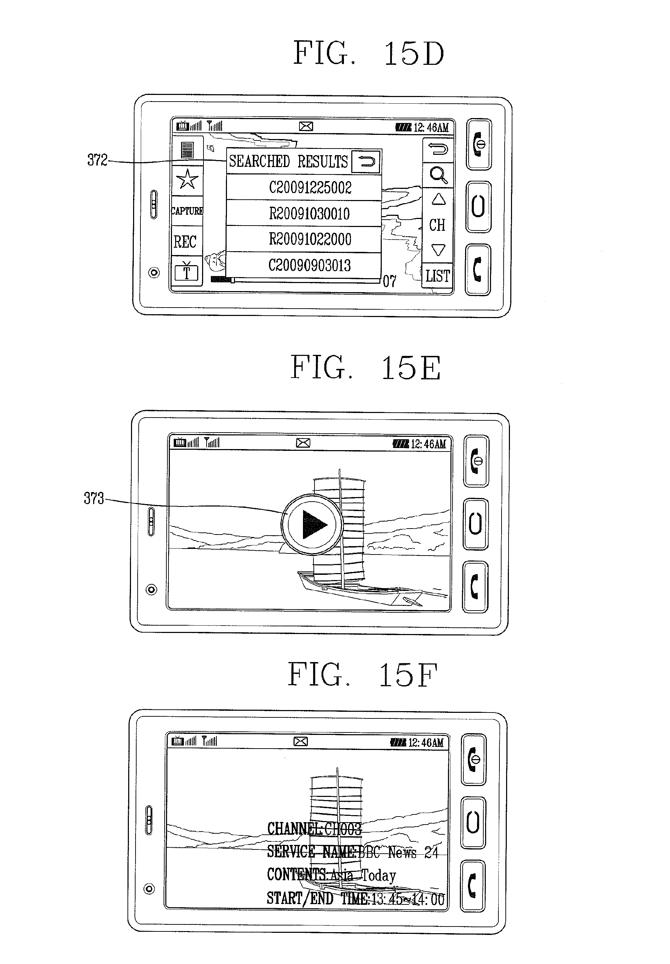

If the related search has been completed, the controller 180 displays a list of searched results on a popup window 372 (FIG. 15D). If one of the displayed searched results is selected, the controller 180 reads, from the memory 160, pre-stored contents corresponding to the selected result, and displays a preview screen (FIG. 15E). If touch of a play icon 373 on the preview screen is sensed, the controller 180 plays corresponding contents. Here, the controller 180 displays, on the screen, pre-stored broadcast service guide information, together with the corresponding contents (FIG. 15F). In the preferred embodiment, broadcast service guide information is displayed on a pre-stored contents play screen in an overlapped manner. However, the screen may be divided into two regions, such that the pre-stored contents play screen is displayed on one region, and broadcast service guide information is displayed on another region.

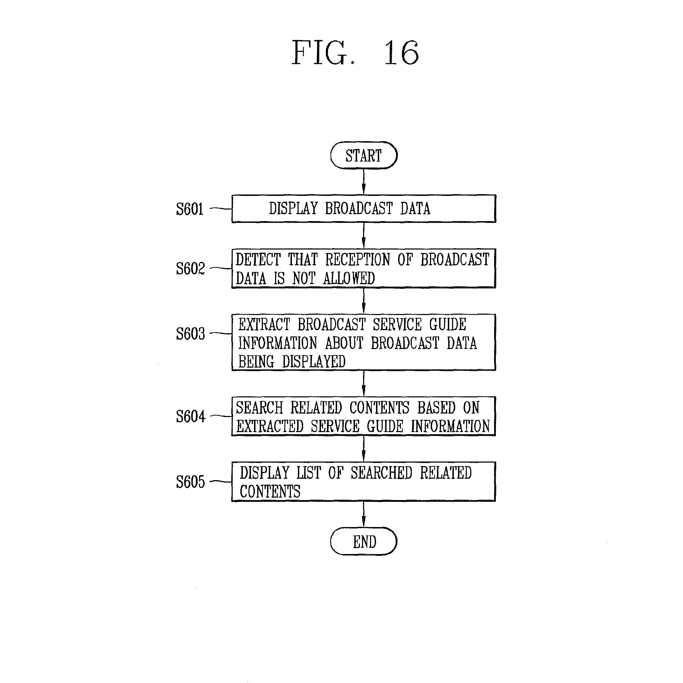

FIG. 16 is a flowchart showing a related contents providing method by a mobile terminal according to a fourth embodiment of the present invention.

The controller 180 of the mobile terminal 100 receives broadcast data through a specific broadcast channel, and plays the broadcast data. Then, the controller 180 displays the played broadcast data on the screen (S601).

While playing the broadcast data, the controller 180 detects that the mobile terminal 100 has entered an out of coverage (OOC) area where broadcast data being currently provided can not be received, or a broadcast reception non-allowable area such as a broadcast reception restriction area (S602).

If it is detected that the mobile terminal 100 has entered a broadcast reception non-allowable area, the controller 180 extracts, from the pre-stored broadcast service guide information, broadcast service guide information of the broadcast data being currently provided (S603).

When the broadcast service guide information has been extracted, the controller 180 searches for pre-stored contents relating to the broadcast data being currently provided (S604).

When the pre-stored contents relating to the broadcast data have been searched, the controller 180 plays the searched pre-stored contents (S605). If the number of the searched pre-stored contents is one, the controller 180 immediately plays the pre-stored content to display it on the screen. On the other hand, if the number of the searched pre-stored contents is two or more, the controller 180 displays a list of the searched pre-stored contents. When one content is selected from the list of the pre-stored contents, the controller 180 plays and displays the selected content.

If any pre-stored contents relating to the broadcast data have not been searched, the controller 180 outputs an alarm signal indicating that no pre-stored content exists. Here, the controller 180 may display information about channels that can be broadcast at the current position, or may execute the broadcast file box.

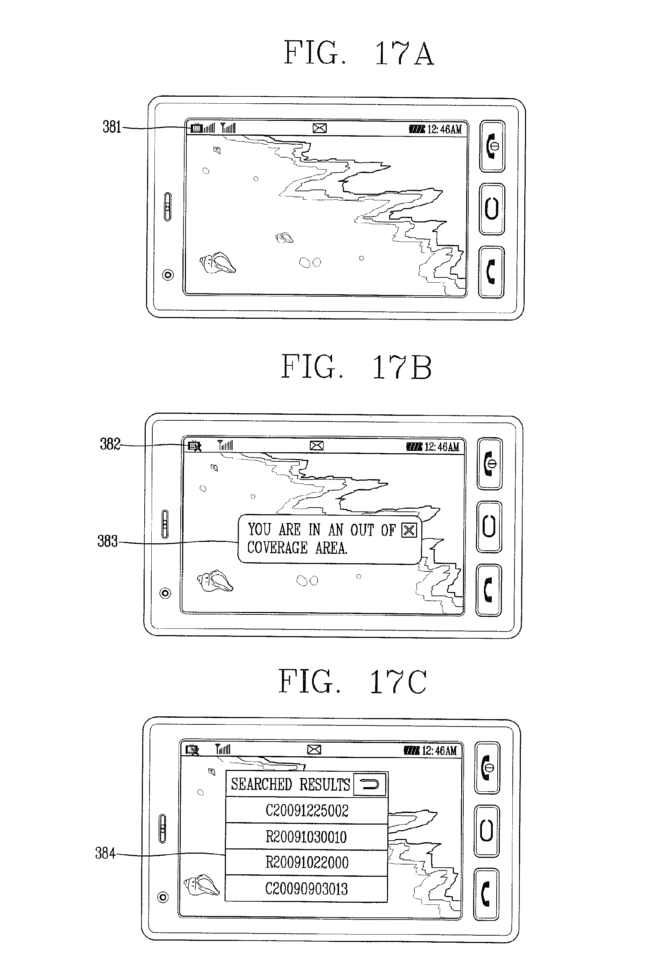

FIGS. 17A to 17F are views showing one example of providing pre-stored contents relating to broadcast data disrupted when a mobile terminal according to a fourth embodiment of the present invention enters a region where broadcast reception is not allowed.

If the mobile terminal 100 enters an OOC area while a user views broadcast, the controller 180 detects the entering. The controller 180 having detected the entering stops receiving a broadcast signal, changes an indicator 381 indicating a reception intensity of the broadcast signal into an indicator 382 indicating that receiving the broadcast signal is not allowed, and displays the indicator 382 (FIGS. 17A-17B). And, the controller 180 displays a message 383 indicating, to a user, that broadcast viewing is not allowable (possible).

Then, the controller 180 searches for pre-stored contents relating to the broadcast data having been disrupted. For instance, if the mobile terminal enters an OOC area while a CH003 is broadcast and thereby receiving a broadcast signal is not allowable, the controller 180 checks whether any contents created from broadcast data provided from the CH 003 exist among the contents stored in the broadcast file box.

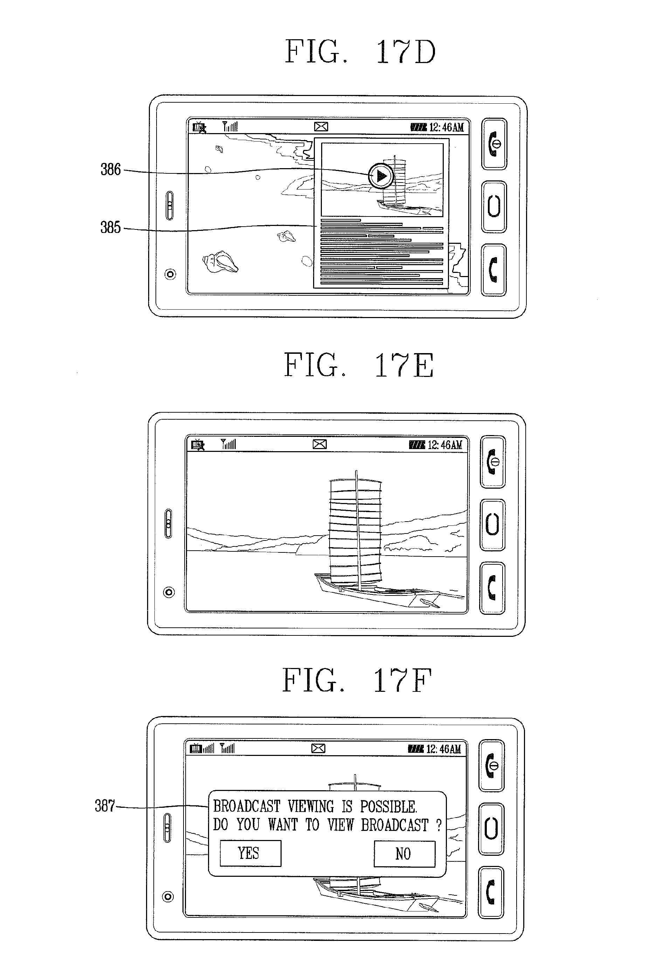

If the search has been completed, the controller 180 displays a list of searched results on a popup window 384 (FIG. 17C). If one of the searched results is selected, the controller 180 displays, on the screen, a detailed view 385 of pre-stored contents corresponding to the selected result (FIG. 17D).

If touch of a play icon 386 of the detailed view 385 is detected, the controller 180 plays a corresponding content to display it on the screen (FIG. 17E). If the mobile terminal 100 is out of the OOC area while the played content is viewed, the controller 180 outputs, on the display 151, a popup window 387 informing that broadcast viewing is possible (FIG. 17F). If a response to an inquiry displayed on the popup window 387 is inputted, the controller 180 executes a subsequent operation corresponding to the response. More concretely, if a positive response has been received, the controller 180 receives, through the broadcast receiving module 111, the broadcast data having been disrupted, and displays the received broadcast data. On the other hand, if a negative response has been received, the controller 180 continues to play the content.

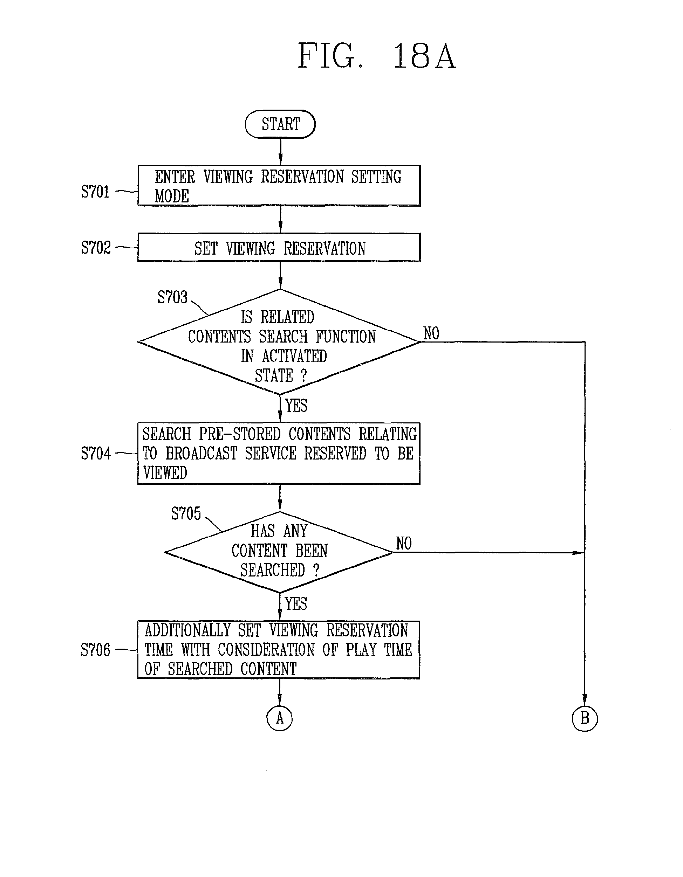

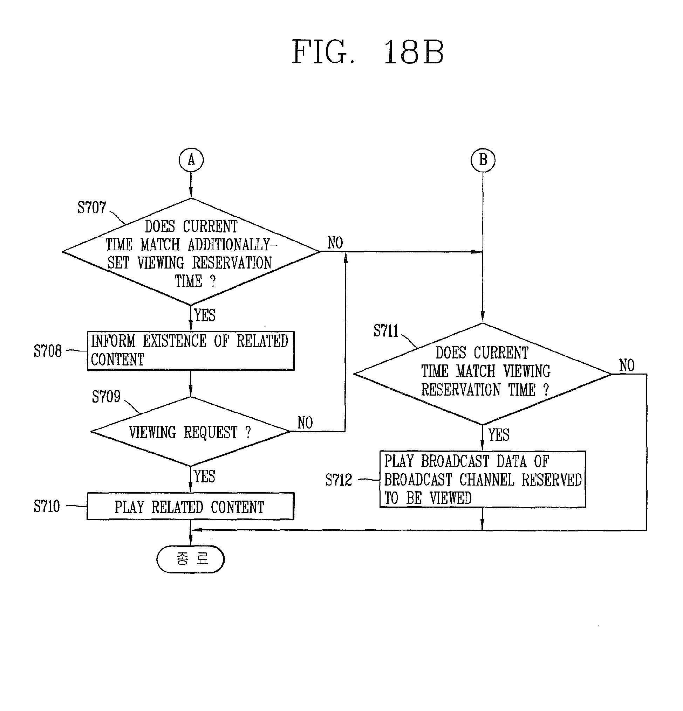

FIG. 18 is a flowchart showing a related contents providing method by a mobile terminal according to a fifth embodiment of the present invention.

Referring to FIG. 18, the controller 180 enters a viewing reservation setting mode according to a user's input (S701). The controller 180 displays a viewing reservation setting screen on the screen.

After entering the viewing reservation setting mode, the controller 180 sets a viewing reservation according to data inputted through the user input unit 130 (S702). More concretely, the controller 180 inserts data inputted by a user into each filed displayed on the viewing reservation setting screen. The viewing reservation setting screen includes fields such as a reservation date, a viewing time, a broadcast channel or broadcast program, activation/non-activation of a related contents search function. If the data input to each filed of the viewing reservation setting screen has been completed, the controller 180 stores viewing reservation information in the memory 160 according to a user's command.

If the viewing reservation setting has been completed, the controller 180 checks whether a related contents search function is in an activated state based on the viewing reservation information (S703). If the related contents search function is in an activated state as a result of the check, the controller 180 searches for pre-stored contents relating to broadcast data reserved to be viewed, from the broadcast file box (S704). That is, the controller 180 searches for a broadcast channel reserved to be viewed, or video-recorded or captured contents relating to a broadcast program, from the broadcast file box.

If the related contents search function is in a non-activated state as a result of the check, the controller 180 executes S611.

If the search for related contents has been completed, the controller 180 checks whether any related contents have been searched (S705).

If any related contents have been searched, the controller 180 additionally sets a viewing reservation time with consideration of a play time of the searched pre-stored contents (S706). When the number of the searched pre-stored contents is two or more, the controller 180 additionally sets a viewing reservation time with consideration of an entire play time of the searched pre-stored contents. For instance, if play times of two searched pre-stored contents are 45 minutes and 1 hour, and a viewing reservation time is 20:00 o'clock, the controller 180 additionally sets a viewing reservation time as 18:15 o'clock so that the searched pre-stored contents can be played to be viewed before the viewing reservation time. That is, the controller 180 additionally sets a viewing reservation time as 18:15 o'clock.

If any related contents have not been searched from the contents pre-stored in the memory 160 in S705, the controller 180 executes S711.

After additionally setting the viewing reservation time with consideration of the play time of the searched pre-stored contents, the controller 180 checks whether the current time is consistent with the additionally-set viewing reservation time (S707).

If the current time is consistent with the additionally-set viewing reservation time, the controller 180 outputs an alarm signal indicating that pre-stored contents relating to a broadcast program reserved to be viewed have been searched (S608). That is, the controller 180 informs a user that pre-stored contents relating to a broadcast program reserved to be viewed exist.

If a viewing approval response to the alarm signal has been inputted through the user input unit 130, the controller 180 plays corresponding pre-stored contents to display them on the screen (S709, S710).

On the other hand, if a viewing refusal response to the alarm signal has been inputted, the controller 180 executes S711.

If the current time is not consistent with the additionally-set viewing reservation time in S707, the controller 180 checks whether the current time is consistent with the set viewing reservation time (S711). That is, the controller 180 checks whether the current time corresponds to the viewing reservation time.

If the current time is consistent with the set viewing reservation time, the controller 180 operates the broadcast receiving module 111 to receive broadcast data received through a broadcast channel reserved to be viewed, and plays to display the received broadcast data (S712).

If the current time corresponds to the viewing reservation time, the controller 180 may inform a user that a broadcast program reserved to be viewed exists. Then, the controller 180 may receive and play the broadcast data reserved to be viewed according to the user's response.

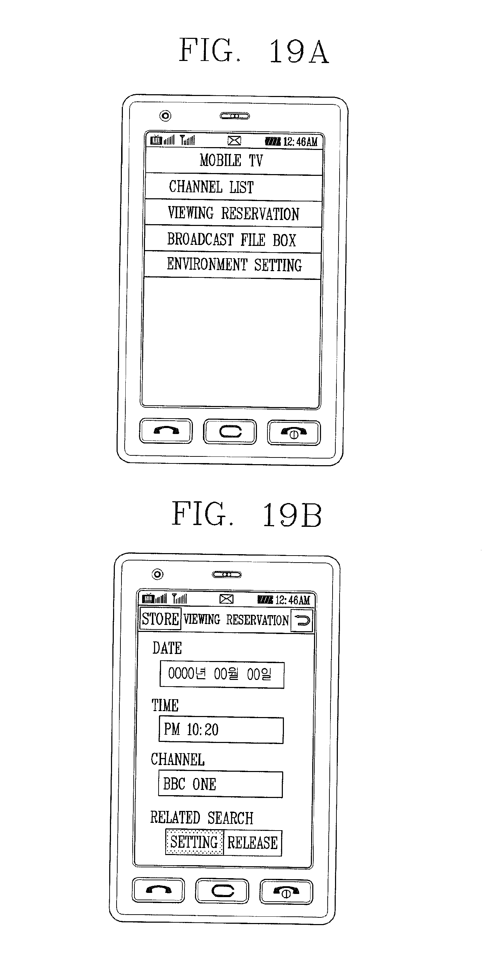

FIGS. 19A to 19E are views showing one example of a viewing reservation process by a mobile terminal according to a fifth embodiment of the present invention.

As shown in FIG. 19A, if a broadcast menu is selected, the controller 180 displays sub menus on the screen. If a viewing reservation is selected from the displayed sub menus, the controller 180 enters a viewing reservation setting mode. As shown in FIG. 19B, the controller 180 display a viewing reservation setting screen on the display 151.

The controller 180 inserts data inputted through the user input unit 130 into each field positioned on the viewing reservation setting screen. If the data input to each field has been completed, the controller 180 stores viewing reservation information. Here, the controller 180 checks whether a related contents search function has been set to the viewing reservation information. If the related contents search function has been set, the controller 180 searches for pre-stored contents relating to a broadcast channel reserved to be viewed. If the pre-stored contents relating to a broadcast channel reserved to be viewed have been searched, the controller 180 additionally sets a viewing reservation time with consideration of a play time of the searched pre-stored contents.

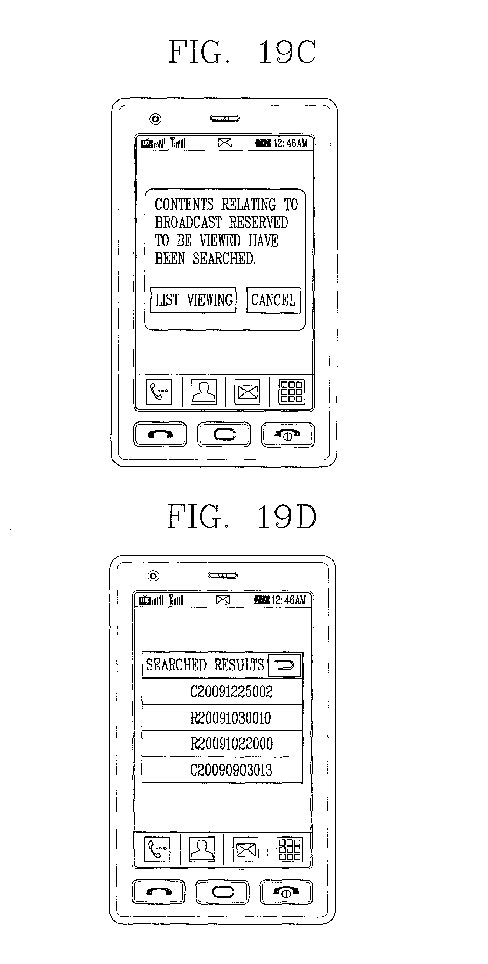

If the current time corresponds to the additionally-set viewing reservation time, as shown in FIG. 19C, the controller 180 outputs, on a popup window, a message indicating that pre-stored contents relating to the broadcast channel reserved to be viewed exist. Here, the controller 180 may output an effect sound.

If the user selects a list view icon after checking the displayed message, the controller 180 displays a list of searched pre-stored contents (FIG. 19D). If one of the searched pre-stored contents is selected, the controller 180 plays the corresponding pre-stored content to display it on the screen.

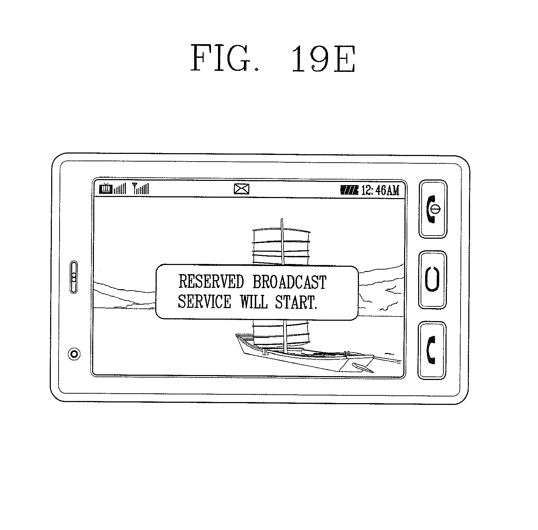

If the current time corresponds to the viewing reservation time, the controller 180 operates the broadcast receiving module 111. And, the controller 180 receives, through the broadcast receiving module 111, broadcast data provided from the broadcast channel having been reserved, based on viewing reservation information. The controller 180 plays the received broadcast data to display it on the screen. As shown in FIG. 19E, the controller 180 outputs an alarm signal indicating starting of a reserved broadcast service.

For instance, if a fourth episode of a drama 'B' has been reserved to be viewed, the controller 180 checks whether pre-stored contents relating to the drama 'B' exist. If a video-recording file of a third episode of the drama 'B' has been searched, the controller 180 informs a user that there is a video-recording file of a third episode of the drama 'B', at a time earlier than a reserved play time of the fourth episode by a running time of the third episode. This may allow the user to view the third episode of the drama 'B' before viewing the fourth episode, or to understand a synopsis, etc. by using broadcast service guide information.

In the preferred embodiment, a viewing reservation has been executed by entering a viewing reservation menu. However, the viewing reservation may be executed by selecting a desired broadcast channel or broadcast program from a screen displaying one of a broadcast schedule, a channel list, and a broadcast program list.

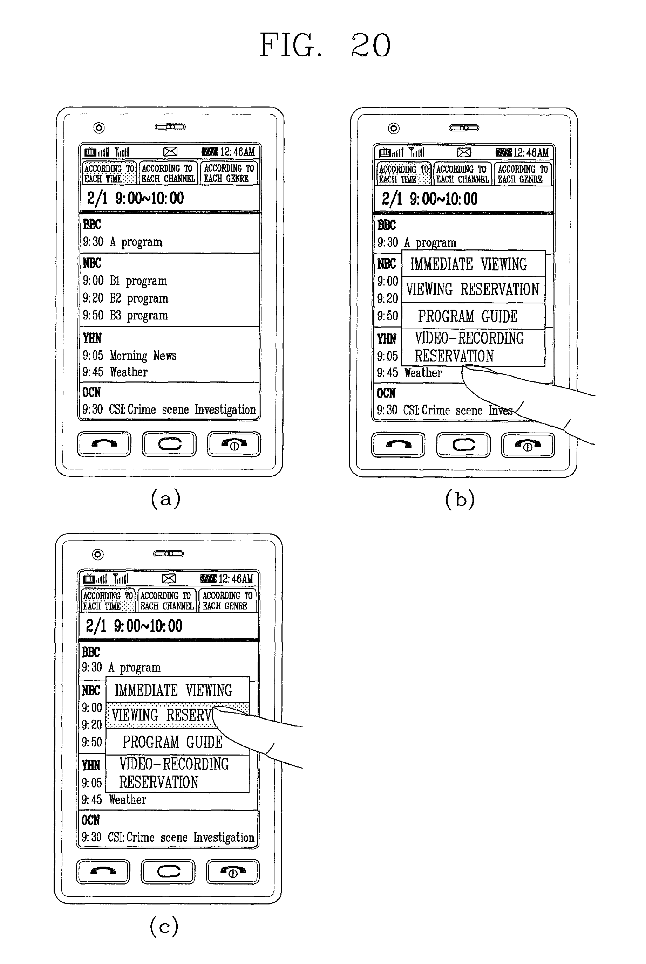

Referring to FIG. 20A, the controller 180 displays a broadcast schedule according to a user's input. Referring to FIG. 20B, when long touch of one of programs on the broadcast schedule is detected, the controller displays a menu window. Referring to FIG. 20C, a viewing reservation icon is selected from menus displayed on the menu window, the controller 180 sets a viewing reservation based on broadcast service information about the selected program.

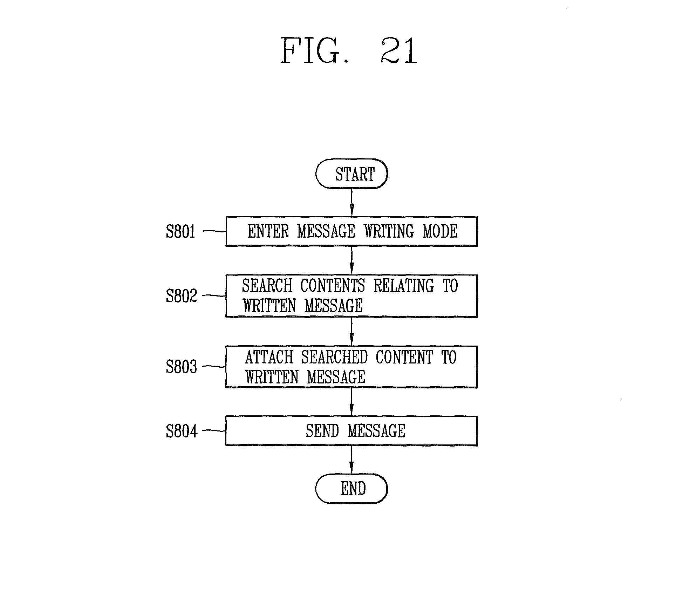

FIG. 21 is a flowchart showing a related contents providing method by a mobile terminal according to a sixth embodiment of the present invention.

The controller 180 enters a message writing mode according to a user's menu manipulation, and displays a message writing screen on the display 151 (S801).

If related search is requested by a user after the message writing has been completed in the message writing mode, the controller 180 searches for pre-stored contents relating to the written message among the contents pre-stored in the mobile terminal (S802). For instance, if the written message is relevant to weather, the controller 180 searches for a video-recording content of 'weather news' among the contents pre-stored in the broadcast file box.

If the process for searching for related contents has been completed, the controller 180 attaches the searched pre-stored contents to a message (S803). When the number of the searched pre-stored contents is two or more, the controller 180 may select a predetermined number of contents to attach to a message.

If a sending command is inputted by a user, the controller 180 sends the message having the searched pre-stored contents attached thereto to another party (S804).

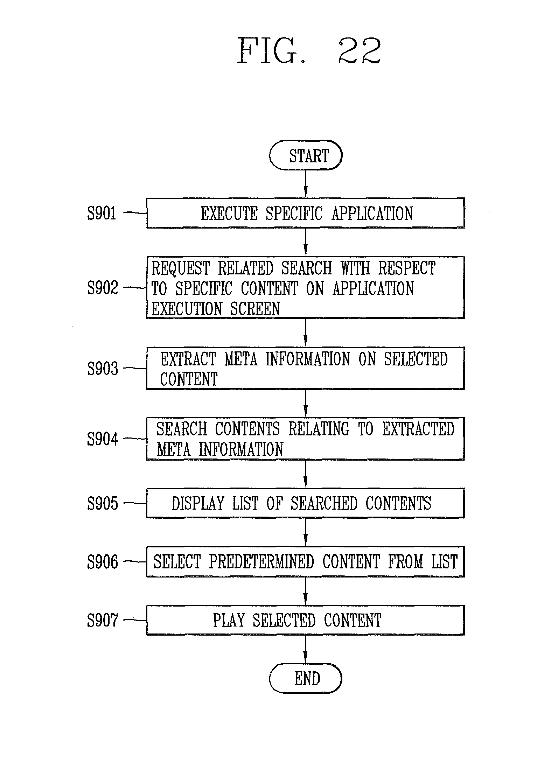

FIG. 22 is a flowchart showing a related contents providing method by a mobile terminal according to a seventh embodiment of the present invention.

The controller 180 executes a specific application according to a user's command (S901). The specific application includes a web browser, an image viewer, a text viewer, a map, broadcast, etc.

Once the specific application has been executed, the controller 180 detects input of a control command requesting related search with respect to one of contents displayed on an application execution screen (S902). Here, the contents include images, moving images, photos, texts, etc.

If the related search is requested, the controller 180 extracts meta information of the requested content (S903). The meta information includes a creation date, a file form, descriptions, a keyword, a file name, a capacity, a size, a play time, a bit rate, a theme, a writer, a title, etc.

Once the meta information has been extracted, the controller 180 searches for pre-stored contents relating to the extracted meta information (S904).

Once the related contents have been searched, the controller 180 displays a list of the related contents on the screen (S905).

If one of the related contents on the list is selected, the controller 180 plays the selected content to display it on the screen (S906, S907).

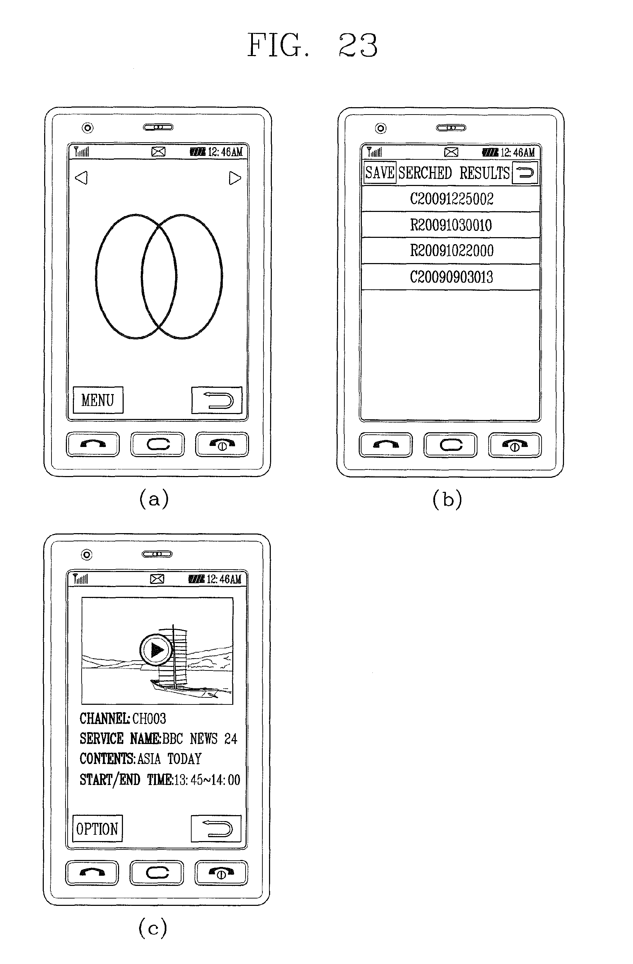

FIG. 23 is a view showing a related contents providing method by the mobile terminal of FIG. 22.

If an album function is selected by a user's menu manipulation, the controller 180 executes the album function and displays a list of photos stored in an album. If one of the photos is selected, the controller 180 decodes the selected photo to display it on the screen (refer to FIG. 23A).

If related search is requested by a user's menu manipulation while the decoded photo is displayed, the controller 180 extracts meta information of the photo displayed on the screen. Once the meta information has been extracted, the controller 180 searches for contents relating to the meta information from the broadcast file box.

If the search is completed, the controller 180 displays a list of the searched contents on the screen (refer to FIG. 23B). If one of the searched contents is selected, the controller 180 displays the selected content on the screen (refer to FIG. 23C).

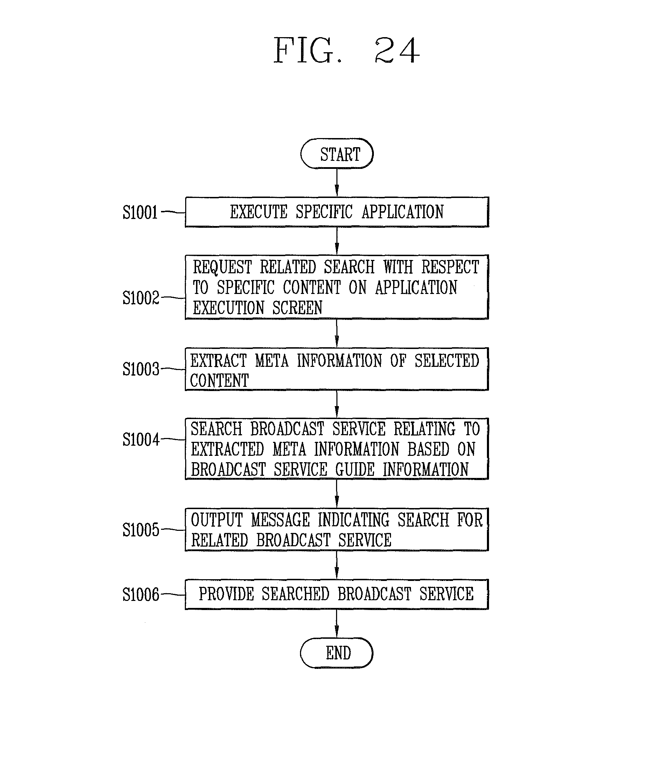

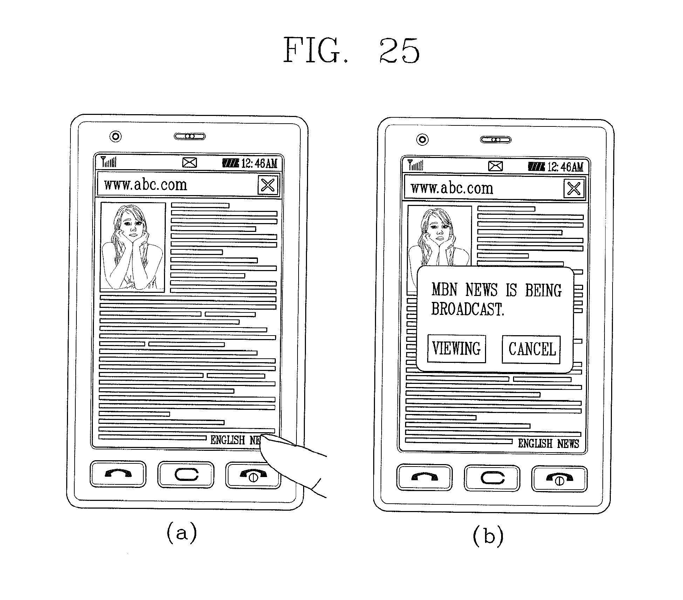

FIG. 24 is a flowchart showing a related contents providing method by a mobile terminal according to an eighth embodiment of the present invention, and FIG. 25 is a view showing one example of providing related broadcast service by the mobile terminal of FIG. 24.

Referring to FIG. 24, the controller 180 executes a specific application according to a user's command (S1001). For instance, when a user selects a web browser function, the controller 180 operates the wireless internet module 113 to execute the web browser function. And, the controller 180 displays a web page received through the wireless internet module 113 on the screen (refer to FIG. 25A).

If related search with respect to one of the contents displayed on the application execution screen is requested, the controller 180 extracts meta information about the corresponding content (S1002, S1003). Referring to FIG. 25A, if one of the contents displayed on the web page is long-touched on the screen, 'English News', the controller 180 detects the long-touch through the sensing unit 140, and recognizes the long-ouch as search request for related contents.

Once the meta information has been extracted, the controller 180 searches for broadcast service relating to the extracted meta information by using broadcast service guide information (1004). For instance, the controller 180 searches for broadcast service having a similar service ID or contents ID to that of the 'English News' from broadcast service guide information. Here, the controller 180 searches for the broadcast service from broadcast services being currently provided.

Once the related broadcast service has been searched, the controller 180 outputs a message indicating the search for related broadcast service (S1005). As shown in FIG. 25B, the controller 180 outputs a pop-up message indicating the search for related broadcast service.

If the searched broadcast service is requested to be viewed, the controller 180 provides the searched broadcast service (S1006). The controller 180 operates the broadcast receiving module 111 to receive broadcast data of the searched broadcast service, and decodes the received broadcast data to display it on the screen.

In this preferred embodiment, a related broadcast service having been searched is immediately viewed. However, a related broadcast service may be searched from broadcast services provided on time points rather than the search time point. If a related broadcast service is searched, the controller 180 may reserve the searched broadcast service according to a user's input.

For instance, if related search is requested by a user while playing a second episode of a drama 'A' among video-recording files stored in the broadcast file box, the controller 180 analyzes a similarity between broadcast service guide information included in the file being currently played and broadcast service guide information stored in the memory 160 or received through the broadcast receiving module 111.

If a broadcast service relating to the file being currently played is searched through the similarity analysis, the controller 180 displays, on a pop-up window, a message indicating that "Third episode of drama 'A' will be broadcast on 10:00 PM today". If a user wishes to reserve the searched broadcast service, a viewing reservation of the searched broadcast service may be set by the user's menu manipulation.

When capturing or video-recording digital broadcast data being currently provided, the mobile terminal according to one or more preferred embodiments of the present invention may store broadcast service guide information of the digital broadcast data, together with the captured or video-recorded digital broadcast data.

Furthermore, the mobile terminal according to the present invention may search broadcast data relating to broadcast being currently provided, from captured or video-recorded broadcast data stored therein, based on broadcast service guide information.

Accordingly, in the present invention, contents relating to digital broadcast being currently provided may be provided to a user.

The aforementioned method may be implemented as a program code stored in a computer-readable storage medium. The storage medium may include ROM, RAM, CD-ROM, a magnetic tape, a floppy disc, an optical data storage device, etc. And, the storage medium may be implemented as carrier wave (transmission through the Internet). The computer may include the controller 180 of the mobile terminal.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A related contents providing method using broadcast service guide information of a mobile terminal, the method comprising:
playing one of broadcast contents pre-stored in the mobile terminal;
searching for one or more broadcast contents relating to the broadcast content being currently played at a particular time point when the broadcast content is played; and
displaying information about the searched broadcast contents.

2. The method of claim 1, wherein the particular time point is one of a play start time of the broadcast content, a play completion time, and a time prior to the play completion time.

3. The method of claim 1, wherein in the searching step, broadcast contents at least partially consistent with broadcast service guide information relating to the broadcast content are searched from the broadcast contents pre-stored in the mobile terminal.

4. The method of claim 3, wherein the broadcast service guide information is stored together with broadcast data, or is stored in the form of link information.

5. The method of claim 3, wherein the broadcast service guide information comprises broadcast time information including a service ID, a service name, a service number, a service description, a service type, channel information, a keyword, a theme, a genre, a synopsis, a contents (program) ID, a contents start time and a contents end time.

6. The method of claim 3, wherein in the searching step, broadcast contents at least partially consistent with broadcast service guide information of the broadcast content being currently played, are searched from the pre-stored broadcast contents.

7. The method of claim 6, wherein in the searching step, if any related contents have not been searched from the pre-stored broadcast contents, real-time broadcast contents at least partially consistent with broadcast service guide information of the broadcast content being currently played, are searched from broadcast service guide information about a real-time broadcast service.

8. The method of claim 7, wherein the broadcast service guide information is provided through request to a broadcast center, or is pre-stored in the mobile terminal.

9. The method of claim 1, wherein in the displaying step, the searched broadcast content is played when the broadcast content being currently played has been completely played.

10. The method of claim 1, wherein the displaying information about the searched broadcast contents comprises:
stopping playing the broadcast content being currently played, and playing the searched broadcast content; and
playing the stopped broadcast content when the searched broadcast content has been completely played.

11. The method of claim 1, wherein the step of displaying information about the searched broadcast contents comprises:
checking whether the searched broadcast content is viewable;
receiving the searched broadcast content if the searched broadcast content is viewable; and
playing and displaying the received broadcast content.

12. The method of claim 11, wherein in the checking step, it is checked whether the current time corresponds to time between a broadcast start time and a broadcast end time of the searched broadcast content.

13. The method of claim 11, further comprising performing a viewing reservation or a video-recording reservation with respect to the searched broadcast content if the searched broadcast content is not viewable.

14. A mobile terminal, comprising:
a broadcast receiving module configured to receive broadcast data and broadcast service guide information;
a memory configured to store therein broadcast contents including one or more parts of the received broadcast data, together with broadcast service guide information of the broadcast contents;
a controller configured to search broadcast contents relating to a broadcast content being currently played, based on broadcast service guide information included in the broadcast content being currently played, while playing the broadcast content selected from broadcast contents pre-stored in the memory, and configured to process the searched broadcast contents; and
a display unit configured to display the broadcast content being currently played under control of the controller.

15. The mobile terminal of claim 14, wherein the broadcast service guide information comprises broadcast time information including a service ID, a service name, a service number, a service description, a service type, channel information, a keyword, a theme, a genre, a synopsis, a contents (program) ID, a contents start time and a contents end time.

16. The mobile terminal of claim 14, wherein the particulartime point is one of a play start time of the broadcast content, a play completion time, and a time prior to the play completion time.

17. The mobile terminal of claim 14, wherein the controller searches for broadcast contents at least partially consistent with broadcast service guide information of the broadcast content being currently played, among the broadcast contents stored in the memory.

18. The mobile terminal of claim 17, wherein the controller plays the searched broadcast content when the broadcast content being currently played has been completely played.

19. The mobile terminal of claim 17, wherein if any related contents have not been searched from the stored broadcast contents, the controller searches for broadcast service guide information about real-time broadcast contents received through the broadcast receiving module, and searches for real-time broadcast contents at least partially consistent with broadcast service guide information of the broadcast content being currently played.

20. The mobile terminal of claim 19, wherein the controller sets a viewing or video-recording reservation with respect to the searched broadcast content if the current time is before a broadcast start time of the searched broadcast content.

21. The mobile terminal of claim 19, wherein if the searched broadcast content is being broadcast, the controller receives to play the corresponding broadcast content.
